# EUROPEAN PATENT APPLICATION

(11) **EP 2 164 061 A1**
(43) Date of publication of application: **17.03.2010**
(21) Application number: 08765183.2
(22) Date of filing: 05.06.2008
(51) Int. Cl.: G09G 3/30, G09G 3/20, H01L 51/50, H04N 5/66

(54) **DISPLAY DEVICE AND METHOD FOR DRIVING DISPLAY DEVICE**

(30) Priority: 11.07.2007 JP 2007182352
(71) Applicant: Sony Corporation, Tokyo 108-0075 (JP)
(72) Inventor: INOUE, Yasuo, Tokyo 108-0075 (JP); ITO, Masahiro, Tokyo 108-0075 (JP)
(74) Representative: Müller, Achim Fritz
(86) International application number: PCT/JP2008/060370
(87) International publication number: WO 2009/008234

(57) **Abstract**

A display device is provided that includes a pixel that has a light emitting element that emits light in accordance with an amount of an electric current and a pixel circuits that controls, in accordance with a video signal, an electric current that is applied to the light emitting element, a scanning line that supplies to the pixel, in a specified scan cycle, a selection signal that selects the pixel that will emit light, a data line that supplies a video signal to the pixel, and a display portion in which drive transistors to which the video signal is supplied are arranged in the form of a matrix. The display device also includes a gamma conversion portion that converts the video signal such that it has a gamma characteristic, and a transistor control portion that controls current-voltage characteristics of the transistors such that the gamma characteristic of the signal that is converted by the gamma conversion portion becomes a linear characteristic when it is multiplied by the current-voltage characteristics of the transistors.

## Description

### TECHNICAL FIELD

The present invention relates to a display device and a display method, and more particularly, to an active matrix type display device that is configured such that scanning lines for selecting pixels in a predetermined scan cycle, data lines that provide luminance information for driving the pixels, and pixel circuits for controlling an amount of electric current based on the luminance information and causing light emitting elements to emit light according to the amount of electric current are arranged in a matrix configuration, as well as a drive method for the display device.

### BACKGROUND ART

Liquid crystal display devices that use liquid crystals and plasma display devices that use plasma have found practical application as flat and thin display devices.

A liquid crystal display device provides a backlight, and displays images by altering an array of liquid crystal molecules by application of voltage, passing or blocking light from the backlight Additionally, a plasma display device causes a plasma state to occur by application of voltage to a gas that is enclosed within a panel, and ultraviolet light produced by energy occurring on return from the plasma state to the original state becomes visible light through irradiation of a fluorescent body, displaying an image.

Meanwhile, in recent years, development has been progressing for self-illuminating type displays employing organic electroluminescent (EL) elements in which the element itself emits light when voltage is applied. When the organic EL element receives energy by electrolysis, it changes from a base state to an excited state, and at the time of return from the excited state to the base state, the difference in energy is emitted as light The organic EL display device is a display device that displays images using these organic EL elements.

A self-illuminating type display device, unlike a liquid crystal display device, which requires a backlight, requires no backlight because the elements themselves emit light, and thus it is possible to make the structure thin compared to a liquid crystal display device. Additionally, because motion characteristics, viewing angle characteristics, color reproduction performance, and the like are superior to a liquid crystal display device, organic EL display devices are attracting attention as next-generation flat and thin display devices.

### DISCLOSURE OF THE INVENTION

### Problem to be Solved by the Invention

Thin film transistors (TFTs) are used for driving the organic EL elements that are contained in the self-illuminating type display device, but due to process variations, irregularities occur in threshold voltages (start-up voltages) and mobilities of the TFTs. When irregularities occur in the threshold voltages (the start-up voltages) and the mobilities of the TFTs, the amount of electric current that flows varies according to the pixel, even if the same voltage is applied. Because the electric currents that flow in the TFTs vary, a problem occurs in that variations occur in the amounts of light that are emitted, depending on the pixel.

In the organic EL element, there is a proportional relationship between the value of the applied electric current and the amount of light that the element emits due to the application of the voltage. Therefore, if voltage-current characteristics of the TFTs are controlled such that the electric currents that flow in all of the organic EL elements in the entire screen are the same as long as the same voltage is applied, the variations in the amounts of light that are emitted by the pixels can be suppressed, and a high-quality image can be displayed.

However, it is difficult to fully exploit the characteristics of a self-illuminating element, such as the organic EL element that emits light, just by controlling the voltage-current characteristic of the TFT. Therefore, there is a demand to more fully exploit the characteristics of the self-illuminating element by controlling a signal that is applied to the panel of the self-illuminating type display device.

Accordingly, the present invention addresses the problems described above and provides a display device and a drive method for the display device that are new and improved and that are capable of displaying a high-quality image by controlling input/ouiput characteristics of a video signal and the current-voltage characteristics of the TFTs.

### Means for Solving the Problem

In order to address the problems that are described above, according to an aspect of the present invention, a display device is provided that includes a pixel that has a light emitting element that emits light in accordance with an amount of an electric current and a pixel circuits that controls, in accordance with a video signal, an electric current that is applied to the light emitting element, a scanning line that supplies to the pixel, in a specified scan cycle, a selection signal that selects the pixel that will emit light, a data line that supplies a video signal to the pixel, and a display portion in which drive transistors to which the video signal is supplied are arranged in the form of a matrix. The display device also includes a gamma conversion portion that converts the video signal such that it has a gamma characteristic, and a transistor control portion that controls current-voltage characteristics of the transistors such that the gamma characteristic of the signal that is converted by the gamma conversion portion becomes a linear characteristic when it is multiplied by the current-voltage characteristics of the transistors.

According to this configuration, the gamma conversion portion converts the video signal such that it has the gamma characteristic, and the transistor control portion controls the current-voltage characteristics of the transistors such that the gamma characteristic of the signal that is converted by the gamma conversion portion becomes the linear characteristic when it is multiplied by the current-voltage characteristics of the transistors. This means that if the same electric current is supplied over the entire screen, the same amount of light emission can be obtained over the entire screen, making it possible to display a high-quality image. This makes it possible to demonstrate more effectively the characteristics of the self-illuminating element such as the organic EL element that emits light with the amount of light emission in accordance with the amount of electric current

The transistor control portion may also include a voltage control portion that controls start-up voltages of the transistors. The transistor control portion may also include a mobility correction portion that corrects mobilities of the transistors. According to this configuration, the voltage control portion controls the start-up voltages of the transistors, and the mobility correction portion corrects the mobilities of the transistors. Further, control is performed such that the start-up voltages and the mobilities of the transistors are corrected, such that they have the linear characteristic when they are multiplied by the current-voltage characteristics of the transistors. This means that if the same electric current is supplied over the entire screen, the same amount of light emission can be obtained over the entire screen, making it possible to display a high-quality image.

The display device may also include a linear conversion portion that converts the video signal that has the gamma characteristic into a video signal that has the linear characteristic. According to this configuration, the linear conversion portion converts the video signal that has the gamma characteristic into the video signal that has the linear characteristic. The video signal that has been converted by the linear conversion portion to have the linear characteristic is input to an amount of light emission detection portion, and the amount of light emission is detected based on the video signal. This makes it easy to perform various types of signal processing with respect to the video signal.

The gamma conversion portion may also convert a video signal that has the linear characteristic such that it has the gamma characteristic. According to this configuration, the gamma conversion portion converts the video signal that has the linear characteristic such that it has the gamma characteristic. The gamma characteristic that the video signal has cancels out the gamma characteristic that the display portion has, making it possible for the self-illuminating elements in the interior of the display portion to have the linear characteristic such that they emit light

Further, in order to address the problems that are described above, according to another aspect of the present invention, a drive method is provided for a display device that includes a pixel that has a light emitting element that emits light in accordance with an amount of an electric current and a pixel circuits that controls, in accordance with a video signal, an electric current that is applied to the light emitting element, a scanning line that supplies to the pixel, in a specified scan cycle, a selection signal that selects the pixel that will emit light, a data line that supplies a video signal to the pixel, and a display portion in which drive transistors to which the video signal is supplied are arranged in the form of a matrix. The drive method includes a step of converting the video signal such that it has a gamma characteristic and also includes a step of controlling current-voltage characteristics of the transistors such that the gamma characteristic of the converted signal becomes a linear characteristic when it is multiplied by the current-voltage characteristics of the transistors.

According to this configuration, the video signal is converted such that it has the gamma characteristic, and the current-voltage characteristics of the transistors is controlled such that the gamma characteristic of the signal that is converted by the gamma conversion portion becomes the linear characteristic when it is multiplied by the current-voltage characteristics of the transistors. This means that if the same electric current is supplied over the entire screen, the same amount of light emission can be obtained over the entire screen, making it possible to display a high-quality image. This makes it possible to demonstrate more effectively the characteristics of the self-illuminating element such as the organic EL element that emits light with the amount of light emission in accordance with the amount of electric current.

### Effects of the Invention

According to the present invention as explained above, a display device and a drive method for the display device can be provided that are new and improved and that are capable of displaying a high-quality image by controlling the input/output characteristics of a video signal and the current-voltage characteristics of the TFTs.

### BRIEF DESCRIPTION OF THE DRAWINGS

FIG 1 is an explanatory diagram that explains the structure of a display device 100 according to an embodiment of the present invention.
FIG 2A is an explanatory diagram that explains, in the form of a graph, a transition in a characteristic of a signal that flows in the display device 100 according to the embodiment of the present invention.
FIG 2B is an explanatory diagram that explains, in the form of a graph, a transition in a characteristic of the signal that flows in the display device 100 according to the embodiment of the present invention.
FIG 2C is an explanatory diagram that explains, in the form of a graph, a transition in a characteristic of the signal that flows in the display device 100 according to the embodiment of the present invention.
FIG 2D is an explanatory diagram that explains, in the form of a graph, a transition in a characteristic of the signal that flows in the display device 100 according to the embodiment of the present invention.
FIG 2E is an explanatory diagram that explains, in the form of a graph, a transition in a characteristic of the signal that flows in the display device 100 according to the embodiment of the present invention.
FIG 2F is an explanatory diagram that explains, in the form of a graph, a transition in a characteristic of the signal that flows in the display device 100 according to the embodiment of the present invention.
FIG 3 is a sectional view that shows an example of cross-sectional structure of a pixel circuit that is provided in a panel 158.
FIG 4 is an equivalent circuit diagram of a 5Tr/1C drive circuit
FIG 5 is a timing chart of drive of the 5Tr/1C drive circuit
FIG 6A is an explanatory figure that shows an on/off state and the like of each transistor in the 5Tr/1C drive circuit
FIG 6B is an explanatory figure that shows the on/off state and the like of each of the transistors in the 5Tr/1C drive circuit
FIG 6C is an explanatory figure that shows the on/off state and the like of each of the transistors in the 5Tr/1C drive circuit
FIG 6D is an explanatory figure that shows the on/off state and the like of each of the transistors in the 5Tr/1C drive circuit
FIG 6E is an explanatory figure that shows the on/off state and the like of each of the transistors in the 5Tr/1C drive circuit
FIG 6F is an explanatory figure that shows the on/off state and the like of each of the transistors in the 5Tr/1C drive circuit
FIG 6G is an explanatory figure that shows the on/off state and the like of each of the transistors in the 5Tr/1C drive circuit
FIG 6H is an explanatory figure that shows the on/off state and the like of each of the transistors in the 5Tr/1C drive circuit
FIG 6I is an explanatory figure that shows the on/off state and the like of each of the transistors in the 5Tr/1C drive circuit
FIG 7 is an equivalent circuit diagram of a 2Tr/1C drive circuit
FIG 8 is a timing chart of drive of the 2Tr/1C drive circuit
FIG 9A is an explanatory figure that shows an on/off state and the like of each transistor in the 2Tr/1C drive circuit
FIG 9B is an explanatory figure that shows the on/off state and the like of each of the transistors in the 2Tr/1C drive circuit
FIG 9C is an explanatory figure that shows the on/off state and the like of each of the transistors in the 2Tr/1C drive circuit
FIG 9D is an explanatory figure that shows the on/off state and the like of each of the transistors in the 2Tr/1C drive circuit
FIG 9E is an explanatory figure that shows the on/off state and the like of each of the transistors in the 2Tr/1C drive circuit
FIG 9F is an explanatory figure that shows the on/off state and the like of each of the transistors in the 2Tr/1C drive circuit
FIG 10 is an equivalent circuit diagram of a 4Tr/1C drive circuit
FIG 11 is an equivalent circuit diagram of a 3Tr/1C drive circuit
FIG 12 is an explanatory figure that shows schematically a configuration of a pixel circuit in an ordinary panel.
FIG 13 is an explanatory figure that shows a timing chart of an operation of a pixel circuit 10 that is shown in FIG 12.
FIG 14 is an explanatory figure that explains current-voltage characteristics of a drive transistor 14.
FIG 15 is an explanatory figure that explains the current-voltage characteristics of the drive transistor 14.
FIG 16 is an explanatory figure that explains the panel 158 according to the embodiment of the present invention.
FIG 17 is an explanatory figure that explains a pixel circuit 212 according to the embodiment of the present invention.
FIG 18 is an explanatory figure that shows a timing chart of an application of voltage in the pixel circuit 212 according to the embodiment of the present invention.
FIG 19 is an explanatory figure that schematically shows a state of the pixel circuit 212 during a mobility correction period T6 to T7 in FIG 18.
FIG 20 is an explanatory figure that shows, in the form of a graph, a characteristic of an output current I_{ds} according to the embodiment of the present invention.
FIG 21 is an explanatory figure that explains the pixel circuit 212 in a state in which thin film transistors 222 and 228 are in an on state.

### DESCRIPTION OF REFERENCE NUMERALS

- 100: display device
- 104: control unit
- 106: recording unit
- 110: signal processing integrated circuit
- 112: edge blurring unit
- 114: I/F unit
- 116: linear conversion unit
- 118: pattern generation unit
- 120: color temperature adjustment unit
- 122: still image detection unit
- 124: long-term color temperature correction unit
- 126: light emission time control unit
- 128: signal level correction unit
- 130: unevenness correction unit
- 132: gamma conversion unit
- 134: dither processing unit
- 136: signal output unit
- 138: long-term color temperature correction detection unit
- 140: gate pulse output unit
- 142: gamma circuit control unit
- 150: storage unit
- 152: data driver
- 154: gamma circuit
- 156: overcurrent detection unit
- 158: panel
- 202: horizontal selector
- 204: drive scanner
- 206: light scanner
- 208: correction scanner
- 210: pixel array
- 212: pixel circuit
- 214,216,218: scanning line
- 220: data line
- 222,224,226,228: thin film transistor
- 230: capacitor
- 232: light emitting element

### BEST MODE FOR CARRYING OUT THE INVENTION

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted

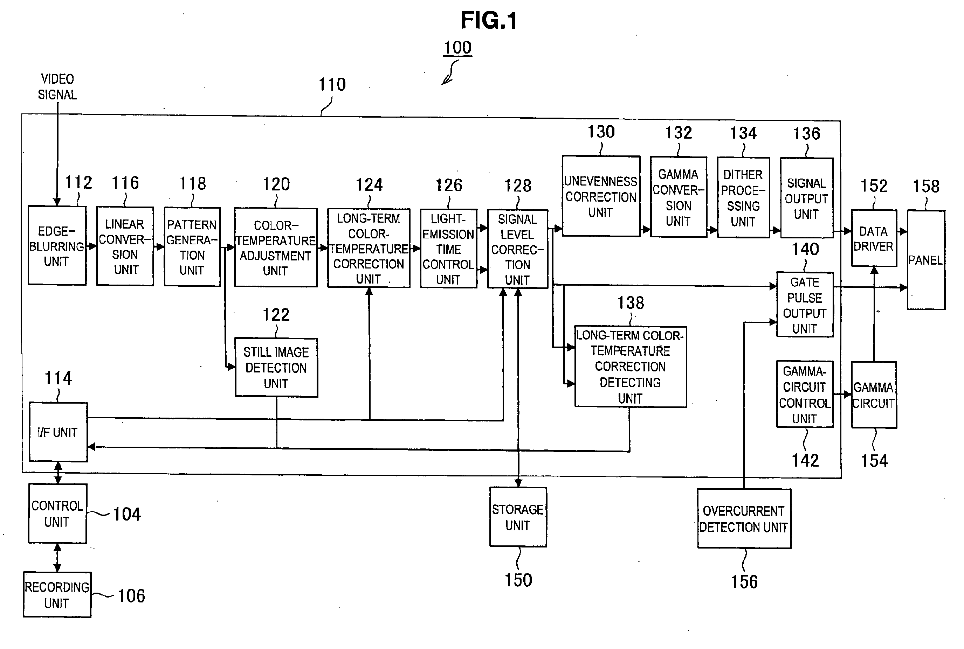

First, a structure of a display device according to an embodiment of the present invention is described FIG 1 is an explanatory diagram that explains the structure of a display device 100 according to the embodiment of the present invention. The structure of the display device 100 according to the embodiment of the present invention is described below with reference to FIG 1.

As shown in FIG 1, the display device 100 according to the embodiment of the present invention includes a control unit 104, a recording unit 106, a signal processing integrated circuit 110, a storage unit 150, a data driver 152, a gamma circuit 154, an overcurrent detection unit 156, and a panel 158.

The signal processing integrated circuit 110 includes an edge blurring unit 112, an I/F unit 114, a linear conversion unit 116, a pattern generation unit 118, a color temperature adjustment unit 120, a still image detection unit 122, a long-term color temperature correction unit 124, a light emission time control unit 126, a signal level correction unit 128, an unevenness correction unit 130, a gamma conversion unit 132, a dither processing unit 134, a signal output unit 136, a long-term color temperature correction detection unit 138, a gate pulse output unit 140, and a gamma circuit control unit 142.

When receiving a video signal, the display device 100 analyzes the video signal, and turns on pixels arranged in the panel 158, mentioned later, according to the analyzed contents, so as to display a video through the panel 158.

The control unit 104 controls the signal processing integrated circuit 110 and sends and receives signals to and from the I/F unit 114. Additionally, the control unit 104 executes various signal processing on the signals received from the I/F unit 114. The signal processing executed in the control unit 104 includes, for example, calculation of gain to be used for adjusting luminance of an image displayed on the panel 158.

The recording unit 106 is for storing information for controlling the signal processing integrated circuit 110 in the control unit 104 therein. A memory that can store information without deletion of the information even if power of the display device 100 is turned off is preferably used as the recording unit 106. An EEPROM (Electronically Erasable and Programmable Read Only Memory) that can rewrite contents electronically is desirably used as the memory that is adopted as the recording unit 106. The EEPROM is a nonvolatile memory which can write or delete data with the EEPROM being packaged on a substrate, and is suitable for storing information of the display device 100 that changes moment by moment

The signal processing integrated circuit 110 inputs a video signal and executes signal processing with respect to the input video signal. In the present embodiment, the video signal input into the signal processing integrated circuit 110 is a digital signal, and signal width is 10 bits. The signal processing to be executed on the input video signal is executed in the respective sections in the signal processing integrated circuit 110.

The edge blurring unit 112 executes signal processing for blurring an edge on the input video signal. Specifically, the edge blurring unit 112 intentionally shifts an image and blurs its edge so as to prevent a phenomenon of burn-in of the image onto the panel 158.

The linear conversion unit 116 executes signal processing for converting a video signal whose output with respect to an input has a gamma characteristic into a video signal having a linear characteristic. When the linear conversion unit 116 executes the signal processing so that the output with respect to the input has the linear characteristic, various processing with respect to images displayed on the panel 158 becomes easy. The signal processing in the linear conversion unit 116 widens the signal width of the video signal from 10 bits to 14 bits. Once the video signal has been converted by the linear conversion unit 116 such that it has the linear characteristic, it is converted in the gamma conversion unit 132, which is described later, such that it has the gamma characteristic.

The pattern generation unit 118 generates test patterns to be used in the image processing inside the display device 100. The test patterns to be used in the image processing in the display device 100 include, for example, a test pattern which is used for display inspection of the panel 158.

The color temperature adjustment unit 120 adjusts color temperature of images, and adjusts colors to be displayed on the panel 158 of the display device 100. Although not shown in FIG 1, the display device 100 includes color temperature adjusting section which adjusts color temperature, and when a user operates the color temperature adjusting section, color temperature of images to be displayed on the screen can be adjusted manually.

The long-term color temperature correction unit 124 corrects deterioration with age due to variation in luminance/time characteristic (LT characteristic) of respective colors R (red), G (green), and B (blue) of organic EL elements. Because the organic EL elements have different LT characteristics of R, G, and B, color balance deteriorates over light emission time. The long-term color temperature correction unit 124 corrects the color balance.

The light emission time control unit 126 calculates a duty ratio of a pulse at the time of displaying an image on the panel 158, and controls the light emission time of the organic EL elements. The display device 100 applies an electric current to the organic EL elements in the panel 158 while the pulse is in a HI state, so as to cause the organic EL elements to emit light and display an image.

The signal level correction unit 128 corrects the level of the video signal and adjusts the luminance of the video to be displayed on the panel 158 in order to prevent an image bum-in phenomenon. In the image bum-in phenomenon, deterioration of light emission characteristics occurs in a case where the light emission frequency of a specific pixel is high compared to other pixels, leading to a decline in luminance of the pixel that has deteriorated compared with other pixels which have not deteriorated, and the difference in luminance with the surrounding portion which has not deteriorated becomes larger. Due to this difference in luminance, text appears to be burned into the screen.

The signal level correction unit 128 calculates the amount of light emission of respective pixels or a pixel group based on the video signal and the duty ratio of the pulse calculated by the light emission time control unit 126, and calculates gain for reducing the luminance according to need based on the calculated amount of luminance, so as to multiply the video signal by the calculated gain.

The long-term color temperature correction detection unit 138 detects information for correction in the long-term color temperature correction unit 124. The information detected by the long-term color temperature correction detection unit 138 is sent to the control unit 104 via the I/F unit 114, and is recorded in the recording unit 106 via the control unit 104.

The unevenness correction unit 130 corrects unevenness of images and videos displayed on the panel 158. In the unevenness correction unit 130, horizontal stripes of the panel 158 and unevenness in light emission that occurs in localized areas of the screen are corrected based on the level of an input signal and a coordinate position.

The gamma conversion unit 132 executes signal processing for converting the video signal converted into a signal having a linear characteristic by the linear conversion unit 116 into a signal having a gamma characteristic. The signal processing executed in the gamma conversion unit 132 is signal processing for canceling the gamma characteristic of the panel 158 and converting a signal into a signal having a linear characteristic so that the organic EL elements in the panel 158 emit light according to the electric current of the signal. When the gamma conversion unit 132 performs the signal processing, the signal width changes from 14 bits to 12 bits.

The dither processing unit 134 executes dithering with respect to the signal converted by the gamma conversion unit 132. The dithering provides display where displayable colors are combined in order to express medium colors in an environment in which the number of usable colors is small. By executing dithering by the dither processing unit 134, colors which intrinsically cannot be displayed on the panel can be simulated and expressed. The signal width is changed from 12 bits to 10 bits by the dithering in the dither processing unit 134.

The signal output unit 136 outputs the signal after dithering by the dither processing unit 134 to the data driver 152. The signal sent from the signal output unit 136 to the data driver 152 is a signal multiplied by information about the amount of light emission of respective colors R, G, and B, and the signal multiplied by the information about the light emission time is output in the form of a pulse from the gate pulse output unit 140.

The gate pulse output unit 140 outputs a pulse for controlling the light emission time of the panel 158. The pulse output from the gate pulse output unit 140 is a pulse calculated by the light emission time control unit 126 based on the duty ratio. The pulse from the gate pulse output unit 140 determines the light emission time of each pixel on the panel 158.

The gamma circuit control unit 142 gives a setting value to the gamma circuit 154. The setting value that is given by the gamma circuit control unit 142 is a reference voltage to be given to ladder resistance of a D/A converter contained inside the data driver 152.

The storage unit 150 stores, in association with one another, information on one of a pixel and a group of pixels that emits light that exceeds a specified luminance and information on an amount by which the specified luminance is exceeded. The two types of information become necessary when a luminance is corrected in the signal level correction unit 128. Unlike the recording unit 106, a memory in which contents are deleted when the power is turned off may be used as the storage unit 150, and, for example, SDRAM (Synchronous Dynamic Random Access Memory) is desirably used as such a memory.

In a case where an overcurrent is produced by substrate short circuit or the like, the overcurrent detection unit 156 detects the overcurrent and notifies the gate pulse output unit 140. In a case where an overcurrent is produced, the overcurrent detection and notification by the overcurrent detection unit 156 can prevent the overcurrent from being applied to the panel 15 8.

The data driver 152 executes signal processing with respect to the signal received from the signal output unit 136, and outputs a signal for displaying video on the panel 158 to the panel 158. The data driver 152 includes a D/A converter that is not shown in the drawings, and the D/A converter converts a digital signal into an analog signal and outputs the analog signal.

The gamma circuit 154 gives a reference voltage to the ladder resistance of the D/A converter contained inside the data driver 152. The reference voltage to be given to the ladder resistance is generated by the gamma circuit control unit 142.

The panel 158 accepts as inputs an output signal from the data driver 152 and an output pulse from the gate pulse output unit 140, causing the organic EL elements, which are examples of self-illuminating type elements, to emit light to display moving images and still images according to the signal and the pulse that are input In the panel 158, the shape of the surface that displays the images is a plane. The organic EL elements are self-illuminating type elements which emit light when a voltage is applied, and their amount of light emission is proportional to the voltage. Consequently, an IL characteristic (current/light emission amount characteristic) of the organic EL elements also comes to have a proportional relationship.

In the panel 158, although not shown in FIG 1, pixels that are provided with the light emitting elements that self-illuminate in accordance with the amount of electric current and pixel circuits that control the electric current that is applied to the light emitting elements, scanning lines that supply to the pixels, in a specified scanning cycle, selection signals that select the pixels that will emit light, data lines that supply the video signals to the pixels, and transistors that are driven by being supplied with the selection signals are structured by arrangement in a matrix pattern, and the structuring of the pixels, the scanning lines, the data lines, and the transistors in this way enables the display device 100 to display video images in accordance with the video signals.

The structure of the display device 100 according to the embodiment of the present invention has been described above with reference to FIG 1. The display device 100 according to the embodiment of the present invention depicted in FIG 1 converts a video signal to a signal having a linear characteristic using the linear conversion unit 116 and thereafter inputs the converted video signal into the pattern generation unit 118, but the pattern generation unit 118 and the linear conversion unit 116 may be interchanged.

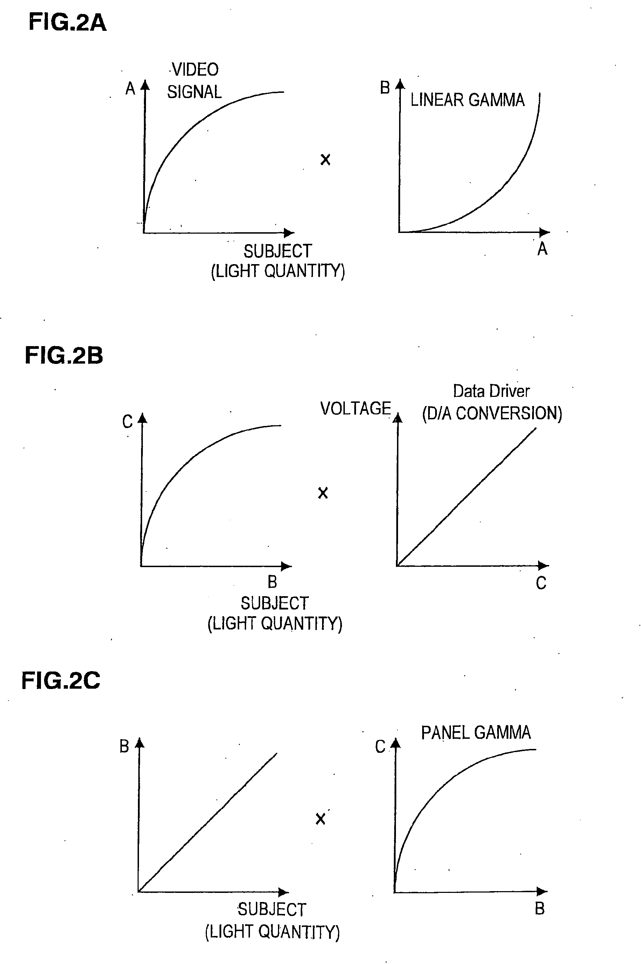

Next, a characteristic transition of a signal flowing in the display device 100 according to the embodiment of the present invention is described below. FIGS. 2A through 2F are explanatory diagrams that explain, in the form of graphs, transitions in characteristics of the signal that flows in the display device 100 according to the embodiment of the present invention. In the respective graphs in FIGS. 2A to 2F, the horizontal axis represents input and the vertical axis represents output.

FIG 2A illustrates that when a subject is input, the linear conversion unit 116 multiplies a video signal whose output A with respect to the light quantity of the subject has a gamma characteristic by an inverse gamma curve (linear gamma) so as to convert the video signal into a video signal whose output with respect to the light quantity of the subj ect has a linear characteristic.

FIG 2B illustrates that the gamma conversion unit 132 multiplies a video signal converted so that an output B with respect to the input of the light quantity of the subject has a linear characteristic by a gamma curve, so as to convert the video signal into a video signal whose output with respect to the input of the light quantity of the subject has a gamma characteristic.

FIG 2C illustrates that the data driver 152 performs D/A conversion of a video signal, which is converted so that an output C with respect to the input of the light quantity of the subject has the gamma characteristic, into an analog signal. In the D/A conversion, a relationship between input and output has the linear characteristic. Consequently, the data driver 152 performs D/A conversion on a video signal, and when the light quantity of the subject is input, an output voltage has the gamma characteristic.

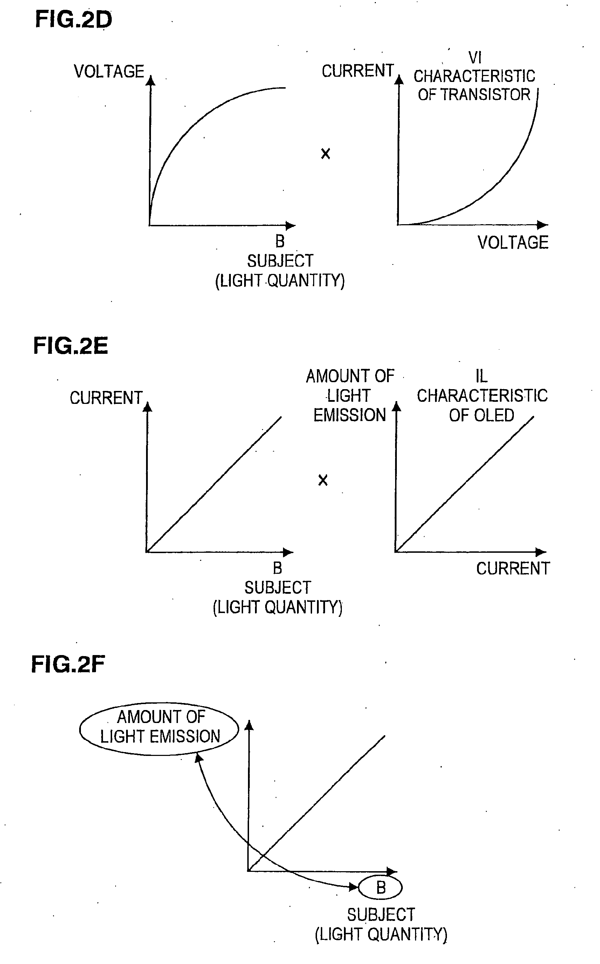

FIG 2D illustrates that when the video signal which was subject to the D/A conversion is input into a transistor included in the panel 158, both gamma characteristics are canceled. The VI characteristic of the transistor is the gamma characteristic which has a curve inverse to a gamma characteristic of the output voltage with respect to the input of the light quantity of the subject. Consequently, when the light quantity of the subject is input, the conversion can be again carried out so that the output current has a linear characteristic.

FIG 2E illustrates that when the light quantity of the subject is input, the signal whose output current has a linear characteristic is input into the panel 158, and the signal having the linear characteristic is multiplied by the IL characteristic of the organic EL elements having the linear characteristic.

As a result, as shown in FIG 2F, when the light quantity of the subject is input, the amount of light emission of the panel (OLED; Organic Light Emitting Diode) has the linear characteristic, and thus by converting the video signal in the linear conversion unit 116 so as to have a linear characteristic, it becomes possible to perform signal processing on the interval to the gamma conversion unit 132 from the linear conversion unit 116 in the signal processing integrated circuit 110 shown in FIG 1 as a linear region.

The characteristic transitions of the signals flowing in the display device 100 according to the embodiment of the present invention have been described above.

### Pixel circuit structure

Next, one example of the structure of the pixel circuit disposed in the panel 158 that is shown in FIG 1 will be described.

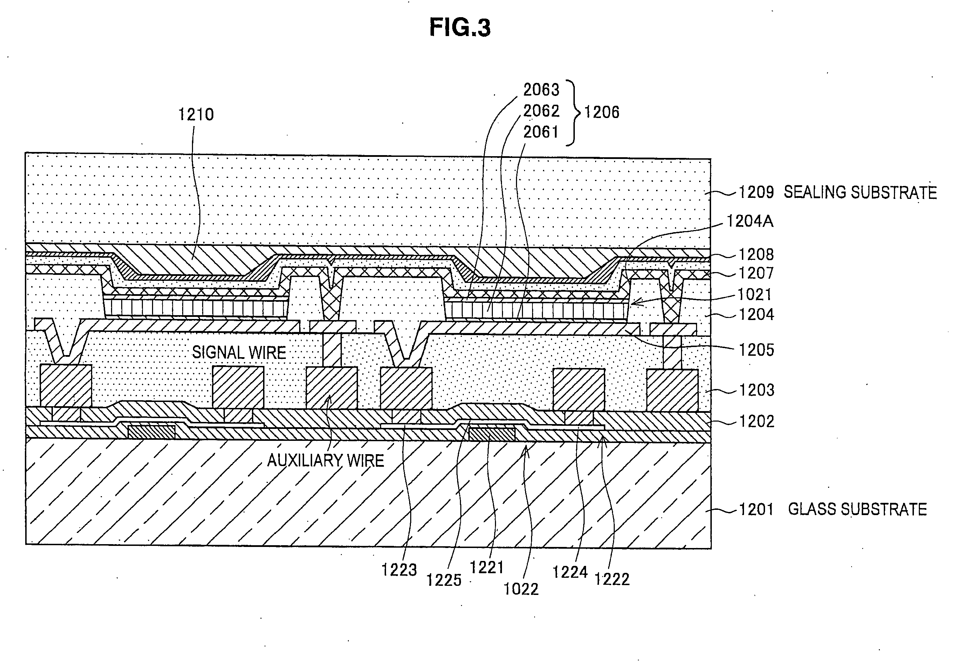

FIG 3 is a cross-sectional view depicting one example of cross-sectional structure of the pixel circuit disposed in the panel 158 that is shown in FIG 1. As shown in FIG 3, the pixel circuit disposed in the panel 158 has a structure in which an insulation film 1202, an insulation leveling film 1203, and a window insulation film 1204 are formed in that order on a glass substrate 1201 in which is formed a drive circuit including a drive transistor 1022 and the like, and an organic EL element 1021 is disposed in a concavity 1204A in the window insulation film 1204. Here, of the respective structural elements of the drive circuit, only the drive transistor 1022 is depicted, and indication of other structural elements is omitted.

The organic EL element 1021 is made up of an anode electrode 1205 composed of metal or the like formed on a bottom portion of the concavity 1204A in the window insulation film 1205, an organic layer (electron transport layer, light emission layer, and hole transport layer/hole implantation layer) 1206 formed on the anode electrode 1206, and a cathode electrode 1207 made up of a transparent conductive film or the like formed commonly on all pixels on the organic layer 1206.

In this organic EL element 1021, the organic layer 1206 is formed by sequentially depositing a hole transport layer/hole implantation layer 2061, a light emission layer 2062, an electron transport layer 2063, and an electron implantation layer (not illustrated) on the anode electrode 1205. Accordingly, light is emitted when electrons and holes in the light emission layer 2062 in the organic layer 1206 electron hole recombine due to current flowing from the drive transistor 1022 via the anode electrode 1205 to the organic layer 1206, under current drive by the drive transistor 1022.

The drive transistor 1022 is made up of a gate electrode 1221, a source/drain region 1223 disposed on one side of a semiconductor layer 1222, a drain/source region 1224 disposed on the other side of the semiconductor layer 1222, and a channel forming region 1225 of a portion facing the gate electrode 1221 of the semiconductor layer 1222. The source/drain region 1223 is electrically connected to the anode electrode 1205 of the organic EL element 1021 via a contact hole.

Accordingly, as shown in FIG 3, after the organic EL element 1021 has been formed in pixel units, via the insulation film 1202, the insulation leveling film 1203, and the window insulation film 1204, on the glass substrate 1201 in which is formed the drive circuit including the drive transistor 1022, a sealing substrate 1209 is attached by an adhesive 1210 via a passivation film 1208, and the organic EL element 1021 is sealed by the sealing substrate 1209, forming the panel 158.

### Drive circuit

Next, one example of the structure of the drive circuit disposed in the panel 158 that is shown in FIG 1 will be described.

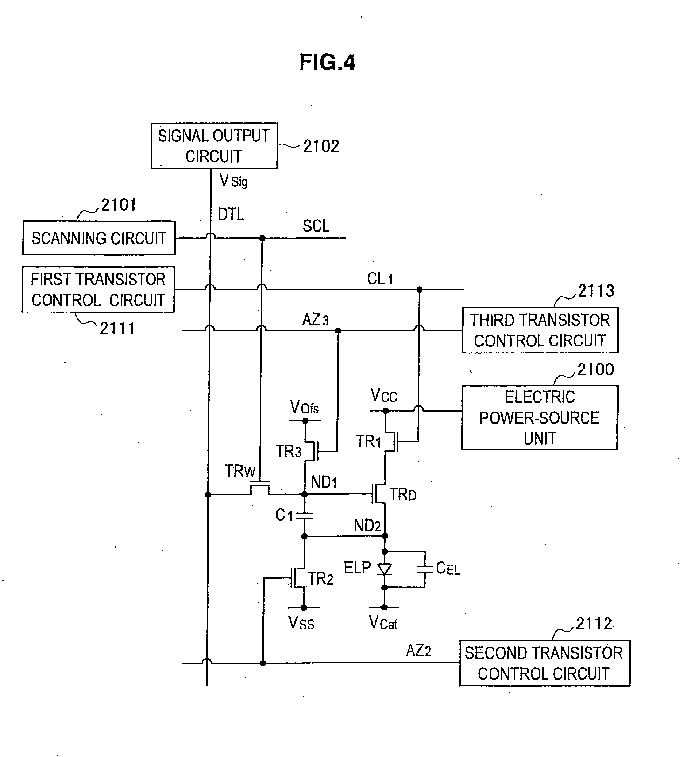

Various circuits that are shown in FIG 4 and the like exist as drive circuits for driving a light emission unit ELP provided with organic EL elements, but items common to a drive circuit fundamentally made up of five transistors/one capacitor (which hereinafter may in some cases be called a 5Tr/1C drive circuit), a drive circuit fundamentally made up of four transistors/one capacitor (which hereinafter may in some cases be called a 4Tr/1C drive circuit), a drive circuit fundamentally made up of three transistors/one capacitor (which hereinafter may in some cases be called a 3Tr/1C drive circuit), and a drive circuit fundamentally made up of two transistors/one capacitor (which hereinafter may in some cases be called a 2Tr/1C drive circuit) will firstly be explained below.

For convenience, each transistor constituting a drive circuit is, in principle, described as being made up of an n-channel type thin film transistor (TFT). Note, however, that depending on the case, a portion of the transistors can also be made up of p-channel type TFTs. Note that a structure in which transistors are formed on a semiconductor substrate or the like can also be used. The structure of the transistors constituting the drive circuit is not particularly limited. In the explanation below, transistors constituting drive circuits are described as being of enhancement type, but are not limited to this. Depression type transistors may be used. Additionally, transistors constituting a drive circuit may be of single-gate type, or may be of dual-gate type.

In the explanation below, a display device is made up of (N / 3) × M pixels arranged in a two-dimensional matrix pattern, and one pixel is taken to be made up of three sub-pixels (a red light emitting sub-pixel that emits red light, a green light emitting sub-pixel that emits green light, and a blue light emitting sub-pixel that emits blue light). Additionally, the light emitting elements constituting each pixel are taken to be driven in line sequence, and a display frame rate is taken to be FR (times/second). That is to say, (N / 3) pixels arranged in an mth column (where m = 1,2,3,..., M), or more specifically, light emitting elements respectively made up of N sub-pixels, are driven simultaneously. To state this differently, in respective light emitting elements constituting one column, timing of their light emission/light nonemission is controlled by the unit of the column to which they belong. Note that processing for writing a video signal with regard to respective pixels making up one column may be processing to write a video signal for all pixels simultaneously (which hereinafter may in some cases be called simply simultaneous write processing), or may be processing to write a sequential video signal for each respective pixel (which hereinafter may in some cases be called simply sequential write processing). Which write processing is used may be suitable selected according to the structure of the drive circuit

Here, in principle, drive and operation relating to a light emitting element posited at an mth column and nth row (where n = 1,2,3,..., N) are described, but such a light emitting element refers, hereinafter, to an (n, m)th light emitting element or (n, m)th sub-pixels. Accordingly, various processing (threshold voltage cancel processing, write processing, and mobility correction processing, described later) is performed until a horizontal scanning period of respective pixels arranged in the mth column (mth horizontal scanning period) ends. Note that performing write processing and mobility correction processing within the mth horizontal scanning period is necessary. On the other hand, depending on the type of the drive circuit, threshold voltage cancel processing and preprocessing accompanying this can be performed in advance of the mth horizontal scanning period.

Accordingly, after the various processing described above has finished completely, light emission units constituting the respective light emitting elements arranged in the mth column are caused to emit light Note that after the various processing described above has finished completely, the light emission units may be caused to emit light immediately, or the light emission units may be caused to emit light after a predetermined period (for example, a predetermined horizontal scanning period for several columns) has elapsed. This predetermined period can be set suitably according to a specification of the display device or structure or the like of the drive circuit Note that in the explanation below, for convenience of explanation, the light emission unit is taken to be caused to emit light immediately after the various types of processing finish. Accordingly, light emission of the light emission units constituting the respective light emitting elements arranged in the mth column is continued until just before the start of a horizontal scanning period of respective light emitting elements arranged in an (m + m')th column. Here, "m"' is determined according to a setting specification of the display device. That is to say, light emission of light emission units constituting respective light emitting elements arranged in an mth column in a given display frame is continued until an (m + m' - 1)th horizontal scanning period. On the other hand, light emission units constituting respective light emitting elements arranged in an mth column are in principle maintained in a light nonemission state from a start period of an (m + m')th horizontal scanning period until write processing and mobility correction processing within an mth horizontal scanning period in the subsequent display frame are completed. By establishing a period of the above-described light nonemission state (which hereinafter may in some cases be called simply a light nonemission period), afterimage blur accompanying active-matrix drive is reduced, and moving-image quality can be made more excellent Note, however, that the light emission/light nonemission state of respective sub-pixels (light emitting elements) is not limited to the state described above. Additionally, the time length of the horizontal scanning period is a time length of less than (1 / FR) × (1 / M) seconds. In a case where the value of (m + m') exceeds M, the horizontal scanning period of the exceeding amount is processed in the next display frame.

In two source/drain regions having one transistor, the term "source/drain region of one side" may in some cases be used with the meaning of a source/drain region on a side connected to an electric power source unit Additionally, a transistor being in an "on" state signifies a state in which a channel has been formed between source/drain regions. Whether or not current flows from the source/drain region of one side of the transistor to the source/drain region of the other side is immaterial. On the other hand, a transistor being in an "off" state signifies a state in which a channel has not been formed between source/drain regions. Additionally, a source/drain region of a given transistor being connected to a source/drain region of another transistor includes a mode in which the source/drain region of the given transistor and the source/drain region of the other transistor occupy the same region. Further, a source/drain region can be constituted not only by impurity-containing polysilicon or amorphous silicon or the like, but can be constituted by a metal, an alloy, electrically conductive particles, a layered structure of these, or layers made up of an organic material (an electrically conductive polymer). Additionally, in timing charts used in the explanation below, length of a horizontal axis indicating each period is schematic, and does not indicate a proportion of time length of each period.

A drive method of a light emission unit ELP employed in a drive circuit indicated in FIG 4 or the like is made up of steps of, for example:
(a) performing preprocessing to apply a first node ND₁ initialization voltage to a first node ND₁ and to apply a second node ND₂ initialization voltage to a second node ND₂ so that an electric potential difference between the first node ND₁ and the second node ND₂ exceeds a threshold voltage of a drive transistor TR_{D}, and moreover an electric potential difference between the second node ND₂ and a cathode electrode disposed on a light emission unit ELP does not exceed a threshold voltage of the light emission unit ELP, and subsequently,
(b) performing, in a state where the electric potential of the first node ND₁ is maintained, threshold voltage cancel processing to change the electric potential of the second node ND₂ toward an electric potential obtained by subtracting the threshold voltage of the drive transistor TR_{D} from the electric potential of the first node ND₁, and thereafter,
(c) performing write processing to apply a video signal from a data line DTL to the first node ND₁ via a write transistor TR_{W} switched to an "on" state by a signal from a scanning line SCL, and subsequently,
(d) driving the light emission unit ELP by putting the first node ND₁ in a floating state by switching the write transistor TR_{W} to an "off" state by the signal from the scanning line SCL, and causing current to flow to the light emission unit ELP from an electric power source unit 2100 via the drive transistor TR_{D} according to the value of the electric potential between the first node ND₁ and the second node ND₂.

As was described above, the step (b) performs, in a state where the electric potential of the first node ND₁ is maintained, threshold voltage cancel processing to change the electric potential of the second node ND₂ toward an electric potential obtained by subtracting the threshold voltage of the drive transistor TR_{D} from the electric potential of the first node ND₁. More specifically, to change the electric potential of the second node ND₂ toward an electric potential obtained by subtracting the threshold voltage of the drive transistor TR_{D} from the electric potential of the first node ND₁, voltage exceeding a voltage which is the threshold voltage of the drive transistor TR_{D} added to the electric potential of the second node ND₂ in the step (a) is applied to the source/drain region of one side of the drive transistor TR_{D}. Qualitatively, in the threshold voltage cancel processing, the extent at which the electric potential between the first node ND₁ and the second node ND₂ (stated differently, the electric potential between the gate electrode and the source region of the drive transistor TR_{D}) approaches the threshold voltage of the drive transistor TR_{D} is affected by the time of the threshold voltage cancel processing. Consequently, in a mode in which for example sufficiently long time of threshold voltage cancel processing is established, the electric potential of the second node ND₂ reaches an electric potential obtained by subtracting the threshold voltage of the drive transistor TR_{D} from the electric potential of the first node ND₁. Accordingly, the electric potential difference between the first node ND₁ and the second node ND₂ reaches the threshold voltage of the drive transistor TR_{D}, and the drive transistor TR_{D} changes to an "off" state. On the other hand, in a mode in which for example the time of threshold voltage cancel processing is established must unavoidably be set short, a case may occur in which the electric potential between the first node ND₁ and the second node ND₂ becomes larger than the threshold voltage of the drive transistor TR_{D}, and the drive transistor TR_{D} does not change to an "off' state. The drive transistor TR_{D} need not necessarily change to an "off" state as a result of threshold voltage cancel processing.

Next, drive circuit structure of each respective drive circuit and a drive method of a light emission unit ELP employed in these drive circuits will be explained in detail hereinafter.

### 5Tr/1C drive circuit

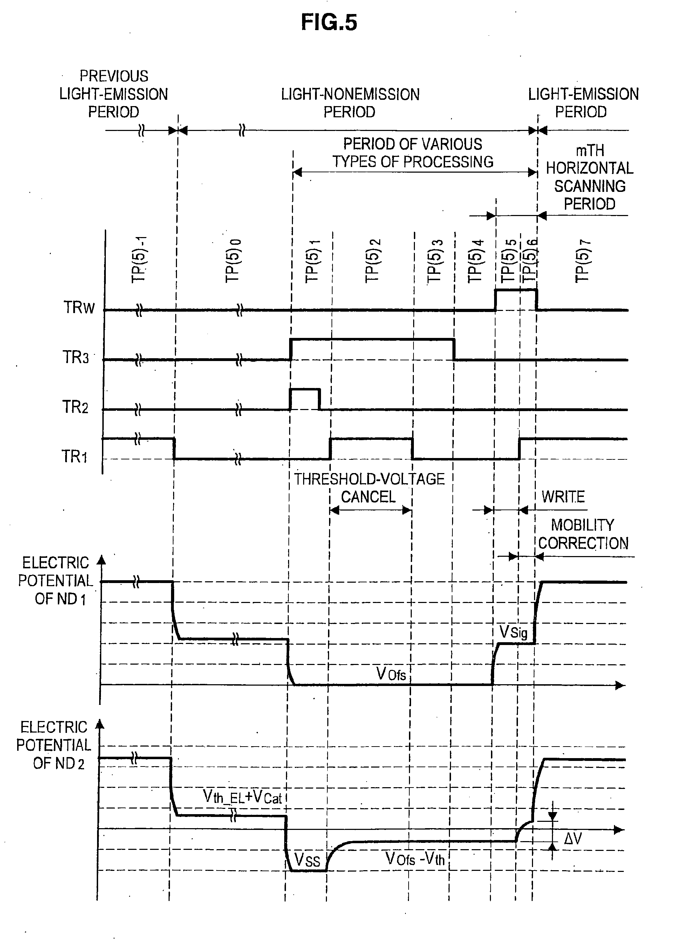

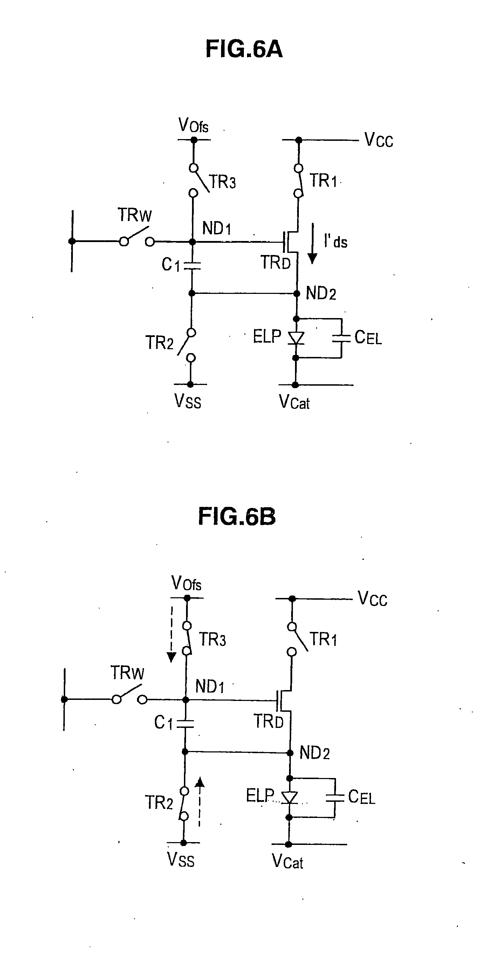

An equivalent circuit diagram of a 5Tr/1C drive circuit is depicted in FIG 4, a timing chart of drive of the 5Tr/1C drive circuit illustrated in FIG. 4 is depicted schematically in FIG. 5, and on/off states and the like of each transistor of the 5Tr/1C drive circuit are depicted schematically in FIG 6A through FIG. 6I.

This 5Tr/1C drive circuit is constituted by five transistors: a write transistor TR_{W}, a drive transistor TR_{D}, a first transistor TR₁, a second transistor TR₂, and a third transistor TR₃. It is further constituted by a capacitor C₁. Note that the write transistor TR_{W}, the first transistor TR₁, the second transistor TR₂, and the third transistor TR₃ may be constituted by a p-channel type TFT. Note also that the drive transistor TR_{D} that is shown in FIG. 4 is equivalent to the drive transistor 1022 that is shown in FIG 3.

### First transistor TR₁

A source/drain region of one side of the first transistor TR₁ is connected to the electric power source unit 2100 (voltage V_{CC}), and a source/drain region of another side of the first transistor TR₁ is connected to a source/drain region of one side of the drive transistor TR_{D}. Additionally, on/off operation of the first transistor TR₁ is controlled by a first transistor control line CL₁ extending from a first transistor control circuit 2111 and connected to a gate electrode of the first transistor TR₁. The electric power source unit 2100 is provided to supply current to a light emission unit ELP and cause the light emission unit ELP to emit light.

### Drive transistor TR_{D}

The source/drain region of one side the drive transistor TR_{D}, as was described above, is connected to the source/drain region of the other side of the first transistor TR₁. On the other hand, the source/drain region of the other side of the drive transistor TR_{D} is connected to:
(1) an anode electrode of the light emission unit ELP,
(2) a source/drain region of another side of the second transistor TR₂, and
(3) one electrode of the capacitor C₁,
and makes up the second node ND₂. Additionally, the gate electrode of the drive transistor TR_{D} is connected to:
(1) a source/drain region of another side of the write transistor TR_{W},
(2) a source/drain region of another side of the third transistor TR₃, and
(3) another electrode of the capacitor C₁,
and makes up the first node ND₁.

Here, the drive transistor TR_{D}, in a light emission state of a light emitting element, is driven according to equation (1) hereinafter so as to cause a drain current I_{ds} to flow. In the light emission state of the light emitting element, the source/drain region on one side of the drive transistor TR_{D} functions as a drain region, and the source/drain region of the other side functions as a source region. For convenience of explanation, in the explanation hereinafter, in some cases the source/drain region of one side of the drive transistor TR_{D} may be called simply the drain region, and the source/drain region of the other side may be called the source region. Note that:
µ: effective mobility
L: channel length
W: channel width
V_{gs:} electric potential between gate electrode and source region
Vₜₕ: threshold voltage
Cₒₓ: (relative permittivity of gate insulation layer) × (electric constant) / (thickness of gate insulation layer) $k ≡ \left(1/2\right) ⋅ \left(W/L\right) ⋅ {C}_{ox}$ is taken to hold.

${I}_{ds} = k ⋅ μ ⋅ {\left({V}_{gs}-{V}_{th}\right)}^{2}$

The light emission unit ELP emits light due to this drain current I_{ds} flowing through the light emission unit ELP. The light emission state (luminance) of the light emission unit ELP is controlled by the size of the value of this drain current I_{ds}.

### Write transistor TR_{W}

The source/drain region of the other side of the write transistor TR_{W}, as was described above, is connected to the gate electrode of the drive transistor TR_{D}. On the other hand, a source/drain region of one side of the write transistor TR_{W} is connected to a data line DTL extending from a signal output circuit 2102. Accordingly, a video signal V_{Sig} for controlling luminance at the light emission unit ELP is supplied to the source/drain region of one side via the data line DTL. Note that various signals or voltages (signals or various reference voltages or the like for precharge drive) other than V_{Sig} may be supplied to the source/drain region of one side via the data line DTL. Additionally, on/off operation of the write transistor TR_{W} is controlled by a scanning line SCL extending from a scanning circuit 2101 and connected to the gate electrode of the write transistor TR_{W}.

### Second transistor TR₂

The source/drain region of the other side of the second transistor TR₂, as was described above, is connected to the source region of the drive transistor TR_{D}. On the other hand, voltage V_{SS} for initializing the electric potential of the second node ND₂ (that is to say, the electric potential of the source region of the drive transistor TR_{D}) is supplied to the source/drain region of one side of the second transistor TR₂. Additionally, on/off operation of the second transistor TR₂ is controlled by a second transistor control line AZ₂ extending from a second transistor control circuit 2112 and connected to the gate electrode of the second transistor TR₂.

### Third transistor TR₃

The source/drain region of the other side of the third transistor TR₃, as was described above, is connected to the gate electrode of the drive transistor TR_{D}. On the other hand, voltage V_{0fs} for initializing the electric potential of the first node ND₁ (that is to say, the electric potential of the gate electrode of the drive transistor TR_{D}) is supplied to the source/drain region of one side of the third transistor TR₃. Additionally, on/off operation of the third transistor TR₃ is controlled by a third transistor control line AZ₃ extending from a third transistor control circuit 2113 and connected to the gate electrode of the third transistor TR₃.

### Light emission unit ELP

The anode electrode of the light emission unit ELP, as was described above, is connected to the source region of the drive transistor TR_{D}. On the other hand, voltage V_{Cat} is applied to the cathode electrode of the light emission unit ELP. Capacitance of the light emission unit ELP is indicated by a symbol C_{EL}. Additionally, threshold voltage taken to be necessary for light emission of the light emission unit ELP is taken to be V_{th-EL}. That is to say, when voltage of V_{th-EL} or more is applied between the anode electrode and the cathode electrode of the light emission unit ELP, the light emission unit ELP emits light

In the explanation hereinafter, values of voltage or electric potential are as shown below, but these are only values for explanation, and there is no limitation to these values.

- V_{Sig}:: Video signal for controlling luminance at the light emission unit ELP
0 volts to 10 volts
- V_{CC:}: Voltage of the electric power source unit 2100
20 volts
- V_{0fs}:: Voltage for initializing the electric potential of the gate electrode of the drive transistor TR_{D} (the electric potential of the first node ND₁)
0 volts
- V_{SS:}: Voltage for initializing the electric potential of the source region of the drive transistor TR_{D} (the electric potential of the second node ND₂)
-10 volts
- Vₜₕ:: Threshold voltage of the drive transistor TR_{D}
3 volts
- V_{Cat}:: Voltage applied to the cathode electrode of the light emission unit ELP
0 volts
- V_{th-EL:}: Threshold voltage of the light emission unit ELP
3 volts

Operation of the 5Tr/1C drive circuit will be described hereinafter. Note that, as was described above, it is described that a light emission state is taken to begin immediately after the various types of processing (threshold voltage cancel processing, write processing, and mobility correction processing) have finished, but there exists no limitation to this. This is similar for the 4Tr/1C drive circuit, 3Tr/1C drive circuit, and 2Tr/1C drive circuit that will be described later.

### Period - TP (5)₋₁ (Refer to FIG 5 and FIG. 6A)

This [period - TP (5)₋₁] is for example operation in a previous display frame, and is a period in which the (n, m)th light emitting elements after completion of the previous various types of processing are in the light emission state. That is to say, drain current I'_{ds} flows to in the light emission unit ELP in the light emitting elements making up the (n, m)th sub-pixels on a basis of equation (5) described later, and luminance of the light emission unit ELP in the light emitting elements making up the (n, m)th sub-pixels is a value corresponding to the drain current I'_{ds}. Here, the write transistor TR_{W}, the second transistor TR₂, and the third transistor TR₃ are in an "off' state, and first transistor TR₁ and drive transistor TR_{D} are in an "on" state. The light emission state of the (n, m)th light emitting elements is continued until immediately before the start of the horizontal scanning period of the light emitting elements arranged in the (m + m')th column.

[Period - TP (5)₀] through [period - TP (5)₄] depicted in FIG. 5 are an operation period from after the light emission state after completion of the previous various types of processing until immediately before the next write processing is performed. That is to say, this [period - TP (5)₀] through [period - TP (5)₄] is a period of given time length for example from the start period of the (m + m')th horizontal scanning period in the previous display frame until the end period of the (m - 1)th horizontal scanning period. Note that [period - TP (5)₁] through [period - TP (5)₄] can be taken to be constituted to be included in the mth horizontal scanning period in the present display frame.

Accordingly, in this [period - TP (5)₀] through [period - TP (5)₄], the (n, m)th light emitting elements are in principle in a light nonemission state. That is to say, in [period - TP (5)₀] through [period - TP (5)₁] and [period - TP (5)₃] through [period - TP (5)₄], the first transistor TR₁ is in an "off" state, and thus the light emitting elements do not emit light Note that in [period - TP (5)₂], the first transistor TR₁ is in an "on" state. However, in this period, threshold voltage cancel processing described later is performed. As will be described in detail in the explanation of threshold voltage cancel processing, if it is assumed that equation (2) described later is satisfied, the light emitting elements do not emit light

The respective periods of [period - TP (5)₀] through [period - TP (5)₄] are firstly described hereinafter. Note that the lengths of the start period of [period - TP (5)₁] and the respective periods of [period - TP (5)₁] through [period - TP (5)₄] may be set suitably in accordance with the design of the display device.

### Period - TP (5)₀

As was described above, in [period - TP (5)₀], the (n, m)th light emitting elements are in a light emission state. The write transistor TR_{W}, the second transistor TR₂, and the third transistor TR₃ are in an "off" state. Additionally, at the time of transition from [period - TP (5)₋₁] to [period - TP (5)₀], because the first transistor TR₁ changes to an "off' state, the electric potential of the second node ND₂ (the source region of the drive transistor TR_{D} or the anode electrode of the light emission unit ELP) falls to (V_{th-EL} + V_{Cat}), and light emission unit ELP changes to a light nonemission state. Additionally, the electric potential of the first node ND₁ (the gate electrode of the drive transistor TR_{D}) in a floating state also falls, so as to follow the fall in the electric potential of the second node ND₂.

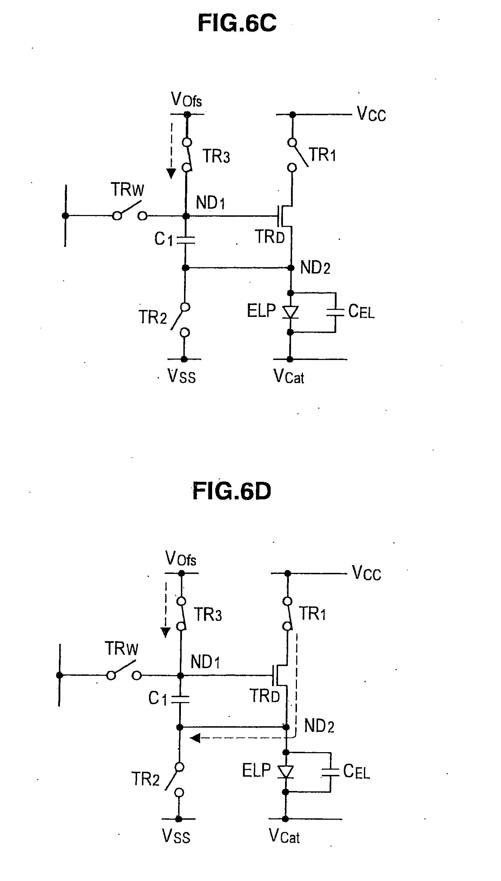

### Period - TP (5)₁ (Refer to FIG. 6B and FIG. 6C)

In this [period - TP (5)₁], preprocessing for performing threshold voltage cancel processing described later is performed. That is to say, at the start of [period - TP (5)₁], the second transistor TR₂ and the third transistor TR₃ are put in an "on" state by putting the second transistor control line AZ₂ and the third transistor control line AZ₃ at high level. As a result of this, the electric potential of the first node ND₁ changes to V_{0fs} (for example, 0 volts). On the other hand, the electric potential of the second node ND₂ changes to Vss (for example, -10 volts). Accordingly, prior to completion of this [period - TP (5)₁], the second transistor TR₂ is put in an "off' state by putting the second transistor control line AZ₂ at low level. Note that the second transistor TR₂ and the third transistor TR₃ may be put in an "on" stale simultaneously, the second transistor TR₂ may be put in an "on" state firstly, or the third transistor TR₃ may be put in an "on" state firstly.

Due to the foregoing processing, the electric potential difference between the gate electrode and the source region of the drive transistor TR_{D} becomes Vₜₕ or higher. The drive transistor TR_{D} changes to an "on" state.

### Period - TP (5)₂ (Refer to FIG 6D)

Next, threshold voltage cancel processing is performed. That is to say, the first transistor TR₁ is put in an "on" state by putting the first transistor control line CL₁ at high level while maintaining the third transistor TR₃ in an "on" state. As a result of this, the electric potential of the first node ND₁ does not change (maintaining V_{0fs} = 0 volts), and the electric potential of the second node ND₂ changes toward an electric potential obtained by subtracting the threshold voltage Vₜₕ of the drive transistor TR_{D} from the electric potential of the first node ND₁. That is to say, the electric potential of the second node ND₂ in a floating state rises. Accordingly, when the electric potential between the gate electrode and the source region of the drive transistor TR_{D} reaches Vₜₕ, the drive transistor TR_{D} changes to an "off" state. Specifically, the electric potential of the second node ND₂ in a floating state approaches (V_{0fs} - Vₜₕ = -3 volts > V_{SS}), and ultimately becomes (V_{0fs} - Vₜₕ). Here, if equation (2) hereinafter is assured, or to state this differently, if the electric potential is selected and determined so as to satisfy equation (2), the light emission unit ELP does not emit light

$\left({V}_{0 ⁢ fs}-{V}_{th}\right) < \left({V}_{th - EL}+{V}_{Cat}\right)$

In this [period - TP (5)₂], the electric potential of the second node ND₂ ultimately becomes (V_{0fs} - Vₜₕ). That is to say, the electric potential of the second node ND₂ is determined dependent solely on the threshold voltage Vₜₕ of the drive transistor TR_{D} and the voltage V_{0fs} for initializing the gate electrode of the drive transistor TR_{D}. Stated differently, there is no dependence on the threshold voltage V_{th-EL} of the light emission unit ELP.

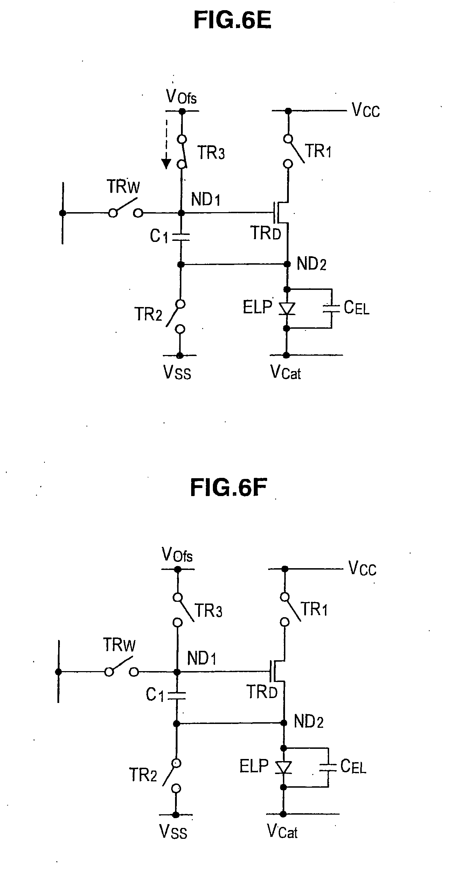

### Period - TP (5)₃ (Refer to FIG 6E)

Thereafter, the first transistor TR₁ is put in an "off" state by putting the first transistor control line CL₁ at low level while maintaining the third transistor TR₃ in an "on" state. As a result of this, the electric potential of the first node ND₁ is held unchanged (maintaining V_{0fs} = 0 volts) and the electric potential of the second node ND₂ also is held unchanged (V_{0fs} - Vₜₕ = -3 volts).

### Period - TP (5)₄ (Refer to FIG 6F)

Next, the third transistor TR₃ is put in an "off" state by putting the third transistor control line AZ₃ at low level. As a result of this, the electric potentials of the first node ND₁ and the second node ND₂ substantially do not change. In actuality, changes can occur due to electrostatic coupling of parasitic capacitance or the like, but, normally, these can be ignored.

Next, the respective periods of [period - TP (5)₅] through [period - TP (5)₇] are described. Note that, as is described later, write processing is performed in [period - TP (5)₅], and mobility correction processing is performed in [period - TP (5)₆]. As was described above, performing these sets of processing within the mth horizontal scanning period is necessary. For convenience of explanation, a start period of [period - TP (5)₅] and an end period of [period - TP (5)₆] are explained as coinciding respectively with the start period and the end period of the mth horizontal scanning period.

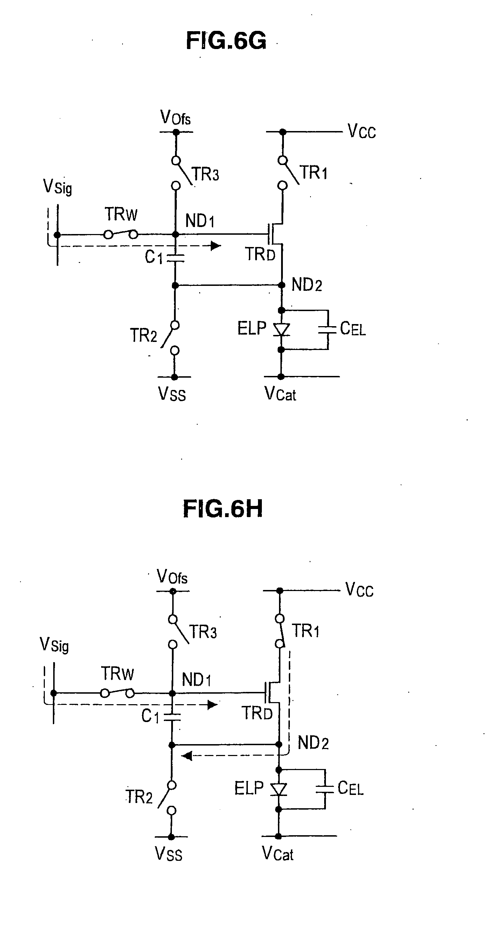

### Period - TP (5)₅] (Refer to FIG. 6G)

Thereafter, write processing is executed with respect to the drive transistor TR_{D}. Specifically, the write transistor TR_{W} is put in an "on" state by putting the electric potential of the data line DTL to the video signal V_{Sig} for controlling the luminance at the light emission unit ELP, and then putting the scanning line SCL at high level, while maintaining an "off" state of the first transistor TR₁, the second transistor TR₂, and the third transistor TR₃. As a result of this, the electric potential of the first node ND₁ rises to V_{Sig}.

Here, capacitance of the capacitor C₁ is indicated by a value c₁, and capacitance of the capacitance C_{EL} of the light emission unit ELP is indicated by a value c_{EL}. Accordingly, the value of parasitic capacitance between the gate electrode and the source region of the drive transistor TR_{D} is taken to be c_{gs}. When the electric potential of the gate electrode of the drive transistor TR_{D} has changed from V_{0fs} to V_{Sig} (> V_{0fs}), the electric potentials of the two ends of the capacitor C₁ (the electric potentials of the first node ND₁ and the second node ND₂), in principle, change. That is to say, an electric charge based on the amount of change (VS_{ig} - V_{0fs}) in the electric potential of the gate electrode of the drive transistor TR_{D} (= the electric potential of the first node ND₁) is allocated to capacitor C₁, the capacitance C_{EL} of the light emission unit ELP, and the parasitic capacitance between the gate electrode and the source region of the drive transistor TR_{D}. However, if the value c_{EL} is sufficiently large in comparison with the value c₁ and the value c_{gs}, change is small for the electric potential of the source region (second node ND₂) of the drive transistor TR_{D} based on the amount of change (V_{Sig} - V_{0fs}) in the electric potential of the gate electrode of the drive transistor TR_{D}. Accordingly, generally, the capacitance value c_{EL} of the capacitance C_{EL} of the light emission unit ELP is larger than the capacitance value c₁ of the capacitor C₁ and the value c_{gs} of the parasitic capacitance of the drive transistor TR_{D}. In this regard, for convenience of explanation, except in cases where there is special need, explanation is given without consideration for change in the electric potential of the second node ND₂ occurring due to change in the electric potential of the first node ND₁. This is similar for other drive circuits as well. Note that in the timing chart of drive depicted in FIG 5 as well, depiction is made without consideration for change in the electric potential of the second node ND₂ occurring due to change in the electric potential of the first node ND₁. When the electric potential of the gate electrode (first node ND₁) of the drive transistor TR_{D} is taken to be Vg and the electric potential of the source region (second node ND₂) of the drive transistor TR_{D} is taken to be Vₛ, the value of V_{g} and the value of Vₛ change as indicated below. Thus, the electric potential difference of the first node ND₁ and the second node ND₂, or in other words, the electric potential difference V_{gs} between the gate electrode and the source region of the drive transistor TR_{D}, can be expresses by equation (3) below.

$\begin{matrix}{V}_{g} = {V}_{Sig} \\ {V}_{s} ≒ {V}_{0 ⁢ fs} - {V}_{th} \\ {V}_{gs} ≒ {V}_{Sig} - \left({V}_{0 ⁢ fs}-{V}_{th}\right)\end{matrix}$

That is to say, V_{gs}, obtained by write processing with respect to the drive transistor TR_{D}, is dependent solely on the video signal V_{Sig} for controlling luminance at the light emission unit ELP, the threshold voltage Vₜₕ of the drive transistor TR_{D}, and the voltage V_{0fs} for initializing the electric potential of the source region of the drive transistor TR_{D}. Accordingly, it is unrelated to the threshold voltage V_{th-EL} of the light emission unit ELP.

### Period-TP (5)₆ (Refer to FIG. 6H)

Thereafter, correction (mobility correction processing) of the electric potential of the source region (second node ND₂) of the drive transistor TR_{D} is performed on a basis of the size of the mobility µ of the drive transistor TR_{D}.

Generally, when the drive transistor TR_{D} has been fabricated from a polysilicon film transistor or the like, occurrence of variation in the mobility µ between transistors is difficult to avoid. Consequently, even when a video signal V_{Sig} having an identical value are applied to the gate electrodes of a plurality of drive transistors TR_{D} in which differences in the mobility µ exist, differences occur between the drain current I_{ds} flowing through drive transistors TR_{D} having a large mobility µ and the drain current I_{ds} flowing through drive transistors TR_{D} having a small mobility µ. Accordingly, when this kind of difference occurs, uniformity of the screen of the display device is lost

Consequently, specifically, the first transistor TR₁ is put into an "on" state by putting the first transistor control line CL₁ at high level while maintaining an "on" state of the drive transistor TR_{W}, and subsequently, after a predetermined time (to) has elapsed, the write transistor TR_{W} is put in an "off" state and the first node ND₁ (the gate electrode of the drive transistor TR_{D}) is put in a floating state by putting the scanning line SCL at low level. Accordingly, in a case where the value of the mobility µ of the drive transistor TR_{D} becomes large as a result of the foregoing, a rise quantity ΔV (electric potential correction value) of the electric potential at the source region of the drive transistor TR_{D} becomes large, and in a case where the value of the mobility µ of the drive transistor TR_{D} becomes small as a result of the foregoing, the rise quantity ΔV (electric potential correction value) of the electric potential at the source region of the drive transistor TR_{D} becomes small. Here, the electric potential difference V_{gs} between the gate electrode and the source region of the drive transistor TR_{D} is transformed from equation (3) to equation (4) below.

${V}_{gs} ≒ {V}_{Sig} - \left({V}_{0 ⁢ fs}-{V}_{th}\right) - ΔV$

Note that the predetermined time (total time t₀ of [period - TP (5)₆]) for executing mobility correction processing may, during design of the display device, be priorly determined as a design value. Additionally, the total time to of [period - TP (5)₆] is determined so that the electric potential (V_{0fs} - Vₜₕ + ΔV) at the source region of the drive transistor TR_{D} at this time satisfies equation (2') below. Accordingly, due to this, the light emission unit ELP does not emit light in [period - TP (5)₆]. Further, correction of variation in a coefficient k (≡ (1 /2)·(W / L)·Cₒₓ) also is performed simultaneously by this mobility correction processing.

$\left({V}_{0 ⁢ fs}-{V}_{th}+ΔV\right) < \left({V}_{th - EL}+{V}_{Cat}\right)$

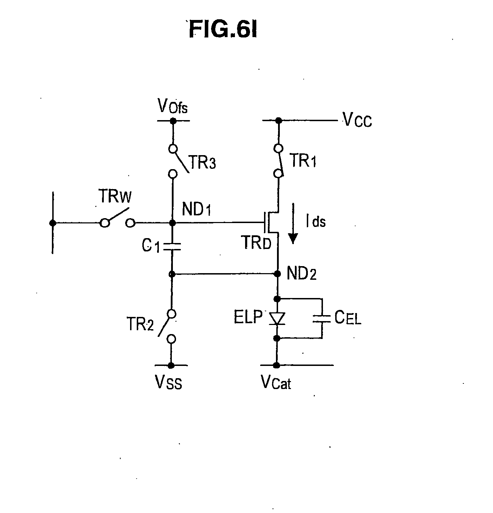

### Period - TP(5)₇ (Refer to FIG 6I)

Threshold-voltage cancel processing, write processing, and mobility correction processing are completed by the foregoing operations. As an incidental comment, as a result of the scanning line SCL changing to low level, the write transistor TR_{W} changes to an "off" state and the first node ND₁, that is to say, the gate electrode of the drive transistor TR_{D}, changes to a floating stale. On the other hand, the first transistor TR₁ maintains an "on" state, and the drain region of the drive transistor TR_{D} is in a state of connection to the electric power source unit 2100 (voltage V_{CC}, for example 20 volts). Consequently, as a result of the foregoing, the electric potential of the second node ND₂ rises.

Here, as was described above, the gate electrode of the drive transistor TR_{D} is in a floating state, and moreover, because the capacitor C₁ exists, a phenomenon similar to that in what is known as a bootstrap circuit occurs at the gate electrode of the drive transistor TR_{D}, and the electric potential of the first node ND₁ also rises. As a result, the electric potential difference V_{gs} between the gate electrode and the source region of the drive transistor TR_{D} maintains the value of equation (4).

Additionally, the electric potential of the second node ND₂ rises and exceeds (V_{th-EL} + V_{Cat}), and thus the light emission unit ELP starts to emit light At this time, the current flowing through the light emission unit ELP is the drain current I_{ds} flowing from the drain region of the drive transistor TR_{D} to the source region of the drive transistor TR_{D}, and thus can be expressed by equation (1). Here, based on equation (1) and equation (4), equation (1) can be transformed into equation (5) below.

${I}_{ds} = k ⋅ μ ⋅ {\left({V}_{Sig}-{V}_{0 ⁢ fs}-ΔV\right)}^{2}$

Consequently, the drain current I_{ds} flowing through the light emission unit ELP, for example in a case where V_{0fs} has been set at 0 volts, is proportional to the square of the value obtained by subtracting the value of the electric potential correction value ΔV at the second node ND₂ (the source region of the drive transistor TR_{D}) arising from the mobility µ of the drive transistor TR_{D} from the value of the video signal V_{Sig} for controlling the luminance at the light emission unit ELP. Stated differently, the drain current I_{ds} flowing through the light emission unit ELP is not dependent on the threshold voltage V_{th-EL} of the light emission unit ELP or the threshold voltage Vₜₕ of the drive transistor TR_{D}. That is to say, the amount of light emission (luminance) of the light emission unit ELP is not subject to an effect by the threshold voltage V_{th-EL} of the light emission unit ELP or an effect by the threshold voltage Vₜₕ of the drive transistor TR_{D}. Accordingly, the luminance of the (n, m)th light emitting elements is a value that corresponds to the drain current I_{ds}.

Moreover, the larger is the mobility µ of the drive transistor TR_{D}, the larger becomes the electric potential correction value ΔV, and thus the smaller becomes the value of V_{gs} on the left side equation (4). Consequently, in equation (5), as a result of the value of (V_{Sig} - V_{0fs} - ΔV)² becoming small even when the value of the mobility µ is large, the drain current I_{ds} can be corrected. That is to say, even in drive transistors TR_{D} of differing mobility µ, if the value of the video signal V_{Sig} is the same, the drain current I_{ds} comes to be substantially the same, and as a result, the drain current I_{ds} flowing through the light emission unit ELP and controlling the luminance of the light emission unit ELP is made uniform. That is to say, variations in luminance arising from variations in the mobility µ (and moreover, variation in k) can be corrected.

The light emission state of the light emission unit ELP continues until the (m + m' - 1)th horizontal scanning period. This time point corresponds to the end of [period - TP (5)₋₁].

Light emission operation of light emitting elements 10 constituting (n, m)th sub-pixels is completed by the foregoing.

Next, an explanation of a 2Tr/1C drive circuit will be made.

### 2Tr/1C drive circuit

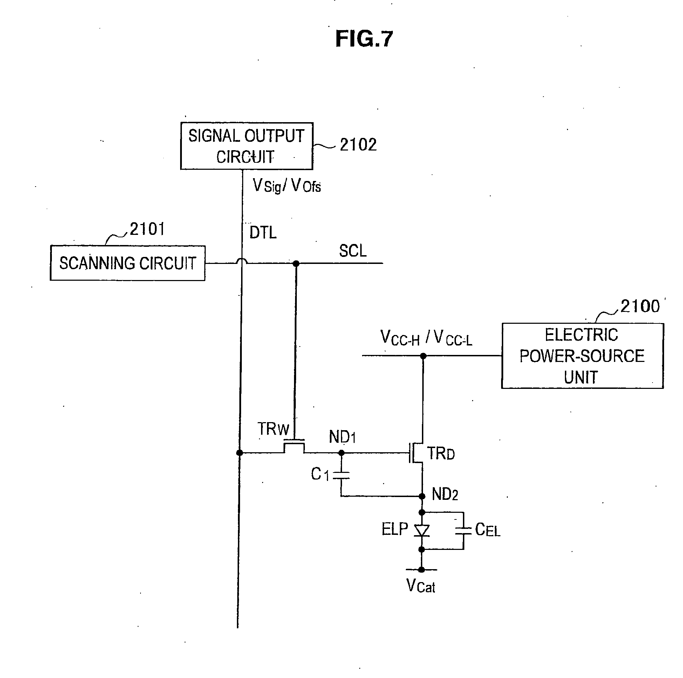

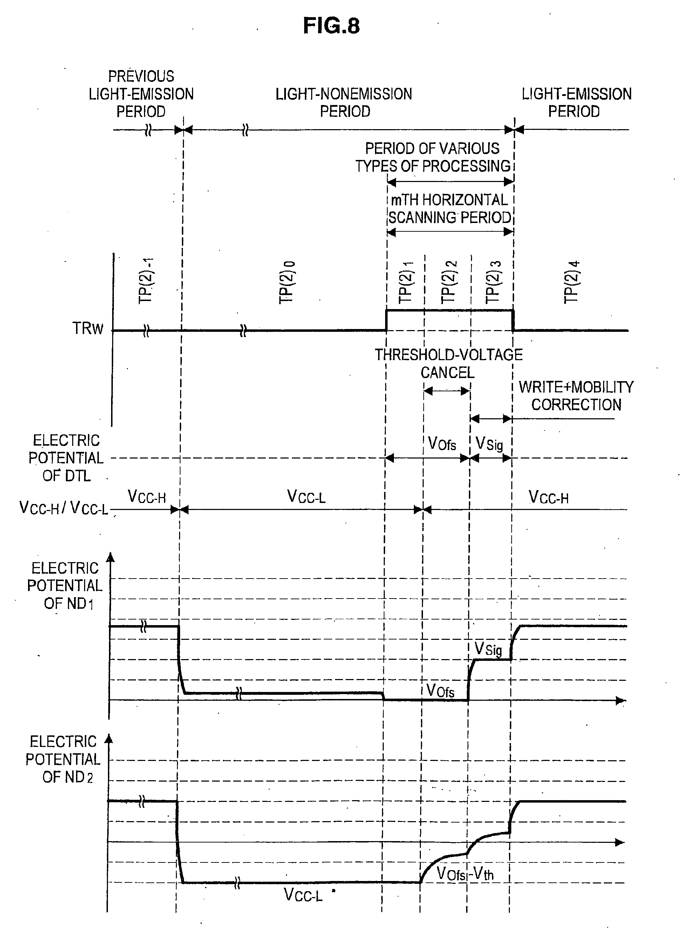

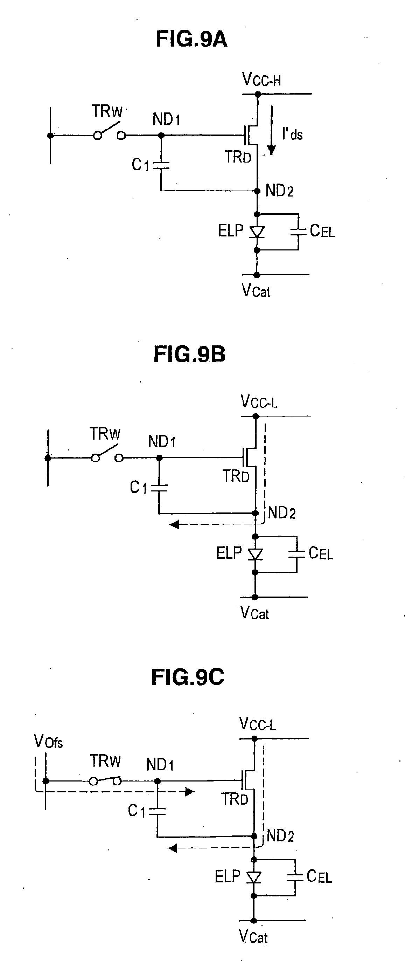

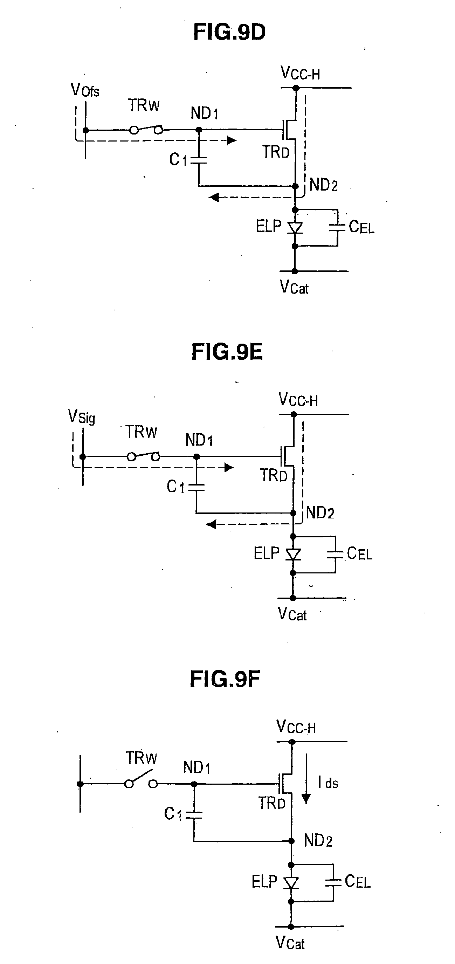

An equivalent circuit diagram of a 2Tr/1C drive circuit is depicted in FIG. 7, a timing chart of drive is depicted schematically in FIG. 8, and on/off states and the like of each transistor of the 2Tr/1C drive circuit are depicted schematically in FIG 9A through FIG 9F.

Three transistors in the above-described 5Tr/1C drive circuit, being the first transistor TR₁, the second transistor TR₂, and the third transistor TR₃, are omitted from this 2Tr/1C drive circuit That is to say, this 2Tr/1C drive circuit is constituted by two transistors, being a write transistor TR_{W} and a drive transistor TR_{D}, and further is constituted by one capacitor C₁. Note also that the drive transistor TR_{D} that is shown in FIG. 7 is equivalent to the drive transistor 1022 that is shown in FIG. 3.

### Drive transistor TR_{D}

The structure of the drive transistor TR_{D} is the same as the structure of the drive transistor TR_{D} described for the 5Tr/1C drive circuit, and thus detailed explanation is omitted. Note, however, that the drain region of the drive transistor TR_{D} is connected to an electric power source unit 2100. Note also that voltage V_{CC-H} for causing the light emission unit ELP to emit light and voltage V_{CC-L} for controlled the electric potential of the source region of the drive transistor TR_{D} are supplied from the electric power source unit 2100. Here, as values of voltages V_{CC-H} and V_{CC-L},
V_{CC-H} = 20 volts
V_{CC-L} = -10 volts
are used by way of example, but there is no limitation to these values.

### Write transistor TR_{W}

The structure of the write transistor TR_{W} is the same as the structure of the write transistor TR_{W} described for the 5Tr/1C drive circuit, and thus detailed explanation is omitted.

### Light emission unit ELP

The structure of the light emission unit ELP is the same as the structure of the light emission unit ELP described for the 5Tr/1C drive circuit, and thus detailed explanation is omitted.

Operation of the 2Tr/1C drive circuit will be described hereinafter.

### Period - TP (2)₋₁ (Refer to FIG. 8 and FIG. 9A)

This [period - TP (2)₋₁] is for example operation in a previous display frame, and is substantially the same operation of [period - TP (5)₋₁] described for the 5Tr/1C drive circuit

[period - TP (2)₀] through [period - TP (2)₂] depicted in FIG 5 are periods corresponding to [period - TP (5)₀] through [period - TP (5)₄] depicted in FIG 5, and are an operation period until immediately before the next write processing is performed. Accordingly, similarly to the 5Tr/1C drive circuit, in [period - TP (2)₀] through [period - TP (2)₂], the (n, m)th light emitting elements are in principle in a light nonemission state. Note, however, that in the operation of the 2Tr/1C drive circuit, as depicted in FIG. 8, aside from [period - TP (2)₃], the matter of [period - TP (2)₁] through [period - TP (2)₂] also including an mth horizontal scanning period differs from the operation of the 5Tr/1C drive circuit Not also that for convenience of explanation, a start period of [period - TP (2)₁] and an end period of [period - TP (2)₃] are explained as coinciding respectively with the start period and the end period of the mth horizontal scanning period.

The respective periods of [period - TP (2)₀] through [period - TP (2)₂] are described hereinafter. Note that similarly to what was explained for the 5Tr/1C drive circuit, the lengths of the respective periods of [period - TP (2)₁] through [period - TP (2)₃] may be set suitably in accordance with the design of the display device.

### Period - TP (2)₀ (Refer to FIG 9B)

This [period - TP (2)₀] is for example operation from the previous display frame to the present display frame. That is to say, this [period - TP (2)₀] is the period from the (m + m')th horizontal scanning period in the previous display frame to the (m - 1)th horizontal scanning period in the present display frame. Accordingly, in this [period - TP (2)₀], the (n, m)th light emitting elements are in a light nonemission state. Here, at the time point of change from [period - TP (2)₋₁] to [period - TP (2)₀], the voltage supplied from the electric power source unit 2100 is switched from V_{CC-H} to V_{CC-L}. As a result, the electric potential of the second node ND₂ falls to V_{CC-L}, and the light emission unit ELP changes to a light nonemission state. Accordingly, the electric potential of the first node ND₁ (the gate electrode of the drive transistor TR_{D}) in a floating state also falls, so as to follow the fall in the electric potential of the second node ND₂.

### Period - TP (2)₁ (Refer to FIG 9C)

Accordingly, the mth horizontal scanning period starts in the present display frame. In this [period - TP (2)₁], preprocessing for performing threshold voltage cancel processing is performed. At the time of the start of [period - TP (2)₁], the write transistor TRw is put in an "on" state by putting the scanning line SCL at high level. As a result, the electric potential of the first node ND₁ changes to V_{0fs} (for example, 0 volts). The electric potential of the second node ND₂ maintains V_{CC-L} (for example, -10 volts).

Due to the above-described operation, the electric potential difference between the gate electrode and the source region of the drive transistor TR_{D} becomes Vₜₕ or higher, and the drive transistor TR_{D} changes to an "on" state.

### Period - TP (2)₂ (Refer to FIG 9D)

Next, threshold voltage cancel processing is performed. That is to say, the voltage supplied from the electric power source unit 2100 is switched from V_{CC-L} to V_{CC-H} while the "on" state of the write transistor TR_{W} is maintained. As a result of this, the electric potential of the first node ND₁ does not change (maintaining V_{0fs} = 0 volts), and the electric potential of the second node ND₂ changes toward an electric potential obtained by subtracting the threshold voltage Vₜₕ of the drive transistor TR_{D} from the electric potential of the first node ND₁. That is to say, the electric potential of the second node ND₂ in a floating state rises. Accordingly, when the electric potential between the gate electrode and the source region of the drive transistor TR_{D} reaches Vₜₕ, the drive transistor TR_{D} changes to an "off" state. Specifically, the electric potential of the second node ND₂ in a floating state approaches (V_{0fs} - Vₜₕ = -3 volts), and ultimately becomes (V_{0fs} - Vₜₕ). Here, if equation (2) hereinafter is assured, or to state this differently, if the electric potential is selected and determined so as to satisfy equation (2), the light emission unit ELP does not emit light

In this [period - TP (2)₂], the electric potential of the second node ND₂ ultimately becomes (V_{0fs} - Vₜₕ). That is to say, the electric potential of the second node ND₂ is determined dependent solely on the threshold voltage Vₜₕ of the drive transistor TR_{D} and the voltage V_{0fs} for initializing the gate electrode of the drive transistor TR_{D}. Accordingly, there is no relationship with the threshold voltage V_{th-EL} of the light emission unit ELP.

### Period - TP (2)₃ (Refer to FIG. 9E)

Next are performed write processing with respect to the drive transistor TR_{D}, and correction (mobility correction processing) of the electric potential of the source region (second node ND₂) of the drive transistor TR_{D} on a basis of the size of the mobility µ of the drive transistor TR_{D}. Specifically, the electric potential of the data line DTL is put to the video signal V_{Sig} for controlling the luminance at the light emission unit ELP while maintaining the "on" state of the write transistor TR_{W}. As a result of this, the electric potential of the first node ND₁ rises to V_{Sig}, and the drive transistor TR_{D} changes to an "on" state. Note that the drive transistor TR_{D} may be put into an "on" state by temporarily putting the write transistor TR_{W} in an "off" state, changing the electric potential of the data line DTL to the video signal V_{Sig} for controlling the luminance at the light emission unit ELP, and thereafter putting the scanning line SCL at high level, putting the write transistor TR_{W} in an "on" state.

Unlike what was explained for the 5Tr/1C drive circuit, electric potential V_{CC-H} is applied to the drain region of the drive transistor TR_{D} from the electric power source unit 2100, and thus the electric potential of the gate electrode of the drive transistor TR_{D} rises. After a predetermined time (to) has elapsed, the write transistor TR_{W} is put in an "off" state and the first node ND₁ (the gate electrode of the drive transistor TR_{D}) is put in a floating state by putting the scanning line SCL at low level. Note that the total time t₀ of this [period - TP (2)₃] may, during design of the display device, be priorly determined as a design value such that the electric potential of the second node ND₂ becomes (V_{0fs} - Vₜₕ + ΔV).

In this [period - TP (2)₃], in a case where the value of the mobility µ of the drive transistor TR_{D} is large, the rise quantity ΔV of the electric potential at the source region of the drive transistor TR_{D} is large, and in a case where the value of the mobility µ of the drive transistor TR_{D} is small, the rise quantity ΔV of the electric potential at the source region of the drive transistor TR_{D} is small.

### Period - TP (2)₄ (Refer to FIG 9E)

Threshold-voltage cancel processing, write processing, and mobility correction processing are completed by the foregoing operations. Accordingly, the same processing as [period - TP (5)₇] described for the 5Tr/1C drive circuit is performed, the electric potential of the second node ND₂ rises and exceeds (V_{th-EL} + V_{Cat}), and thus the light emission unit ELP starts to emit light At this time, the current flowing through the light emission unit ELP can be obtained using equation (5), and thus the drain current I_{ds} flowing through the light emission unit ELP is not dependent on the threshold voltage V_{th-EL} of the light emission unit ELP or the threshold voltage Vₜₕ of the drive transistor TR_{D}. That is to say, the amount of light emission (luminance) of the light emission unit ELP is not subject to an effect by the threshold voltage V_{th-EL} of the light emission unit ELP or an effect by the threshold voltage Vₜₕ of the drive transistor TR_{D}. Moreover, occurrence of variations in the dram current I_{ds} arising from variations in the mobility µ can be suppressed.

Accordingly, the light emission state of the light emission unit ELP continues until the (m + m' -1)th horizontal scanning period. This time point corresponds to the end of [period - TP (2)₋₁].

Light emission operation of light emitting elements 10 constituting (n, m)th sub-pixels is completed by the foregoing.

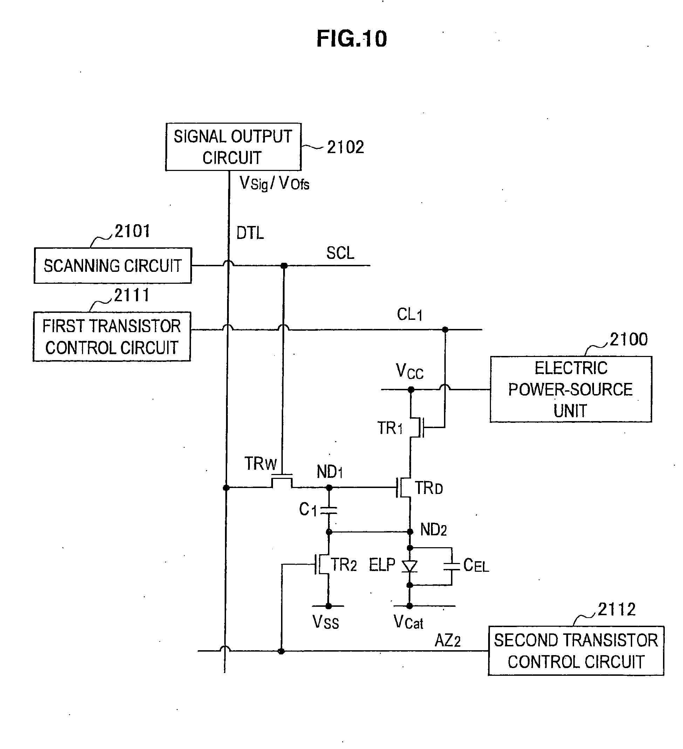

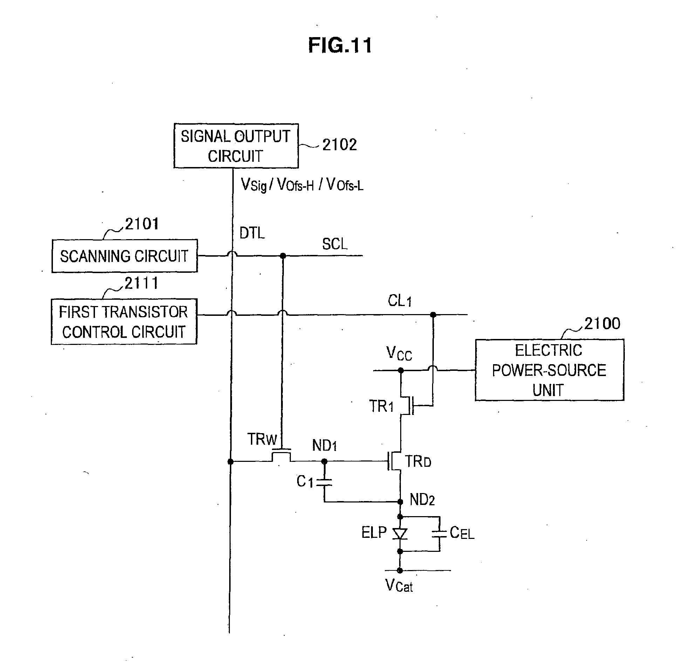

Explanation based on desirable examples was given above, by the structure of the drive circuit according to this invention is not limited to these. The constitution and structure of the respective types of constituent elements making up the display device, light emitting elements, and drive circuit and the steps in the drive method of the light emission unit explained for the respective examples are exemplifications, and can be changed suitably. For example, the 4Tr/1C drive circuit depicted in FIG 10 or the 3Tr/1C drive circuit depicted in FIG. 11 can be employed as the drive circuit

Additionally, in the explanation of operation of the 5Tr/1C drive circuit, write processing and mobility correction were performed discretely, but there is no limitation to this. A structure can be used in which mobility correction processing is also performed in write processing, similarly to the explanation of operation of the 2Tr/1C drive circuit Specifically, a structure may be used that applies a video signal V_{Sig_m} from the data line DTL to a first node via a write transistor T_{Sig} while a light emission controlling transistor T_{EL_C} is in an "on" state.

Next, a drive method of the display device 100 according to the embodiment of the present invention will be explained in greater detail.

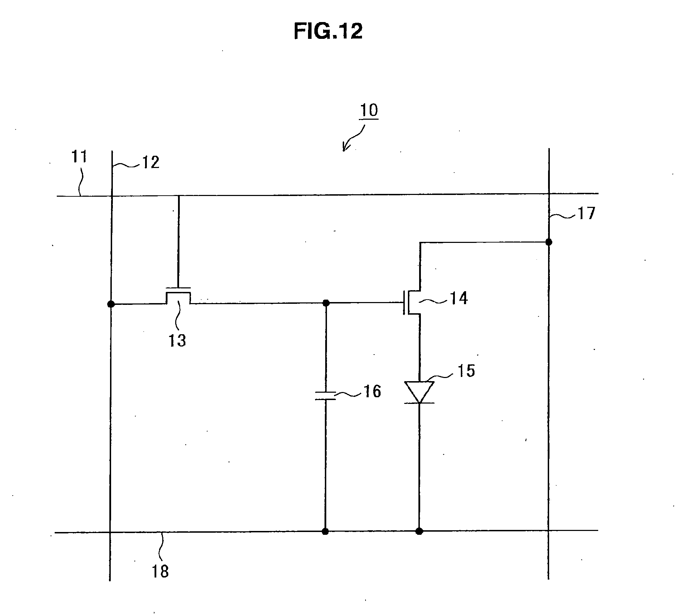

FIG 12 is an explanatory figure that shows schematically a configuration of a pixel circuit in an ordinary panel. FIG 12 shows a one-pixel portion of the pixel circuit in the ordinary panel. As shown in FIG. 12, a pixel circuit 10 is configured such that it includes a scanning line 11, a data line 12, an electric power supply line 17, a grounding wire 18, a sampling transistor 13 that is provided in a position where the scanning line 11 and the data line 12 intersect, a drive transistor 14 whose gate is connected to the source of the sampling transistor 13 and to whose drain the electric power supply line 17 is connected, a light emitting element 15 whose anode is connected to the source of the drive transistor 14, and a storage capacitor 16 that is connected to the source of the sampling transistor 13.

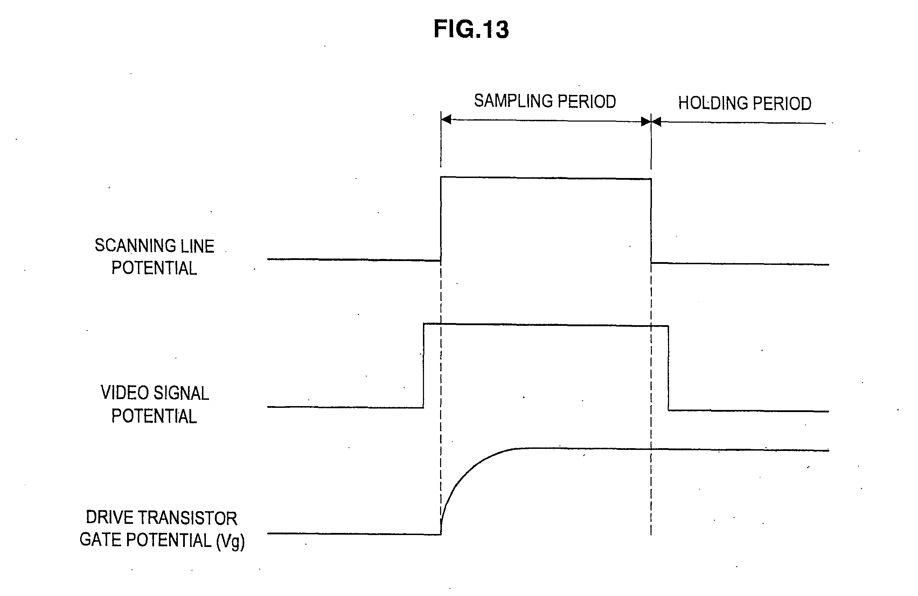

FIG 13 is an explanatory figure that shows a timing chart of an operation of the pixel circuit 10 that is shown in FIG 12. The timing chart that is shown in FIG. 13 shows an operation that samples an electrical potential of the video signal that is supplied to the data line 12 (hereinafter called the video signal line potential) and puts the light emitting element 15, which is configured from an organic EL element, into a light emitting state.

Shifting the electrical potential of the scanning line 11 (hereinafter called the scanning line potential) to a high level causes the sampling transistor 13 to enter an on state. Once the sampling transistor 13 enters the on state, the video signal line potential is accumulated in the storage capacitor 16.

This causes a gate potential V_{g} of the drive transistor 14 to begin rising and causes a drain current I_{ds} to start flowing. The starting to flow of the drain current I_{ds} causes an anode potential of the light emitting element 15 to rise, causing light to be emitted.

Thereafter, if the scanning line potential shifts to a low level, the video signal line potential is held in the storage capacitor 16. Once the video signal line potential is held in the storage capacitor 16, the gate potential V_{g} of the drive transistor 14 becomes constant, so the light emitting element 15 maintains a constant luminance until the next frame.

However, due to variations in the manufacturing processes for the drive transistor 14, variations (characteristic variations) occur in characteristics of a threshold voltage (a start-up voltage) and a mobility of the drive transistor 14.

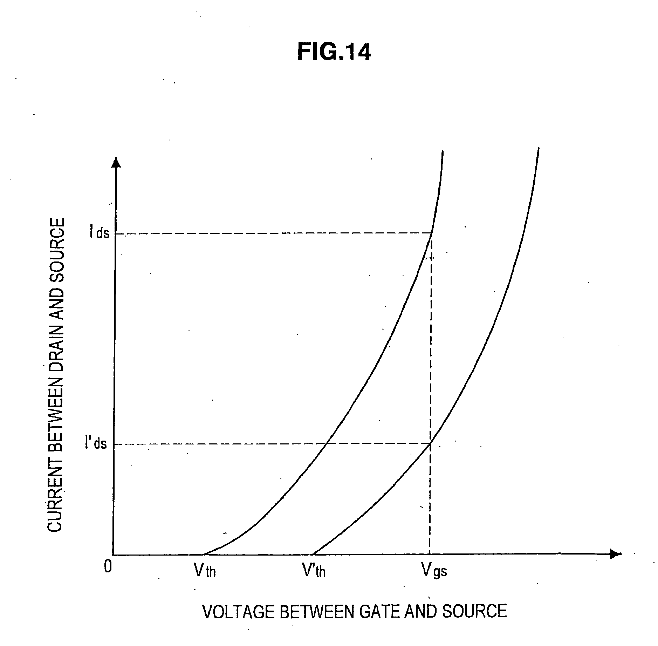

FIG. 14 is an explanatory figure that explains current-voltage characteristics of the drive transistor 14. The current-voltage characteristics of two types of the drive transistor 14 are shown in the form of a graph in FIG. 14, specifically the current-voltage characteristics of drive transistors 14 that have different threshold voltages.

As shown in FIG 14, when threshold voltages Vₜₕ and Vₜₕ' of the drive transistors 14 are different, values I_{ds1} and I_{ds1}' for the drain current at a given gate voltage V_{g1} are also different.

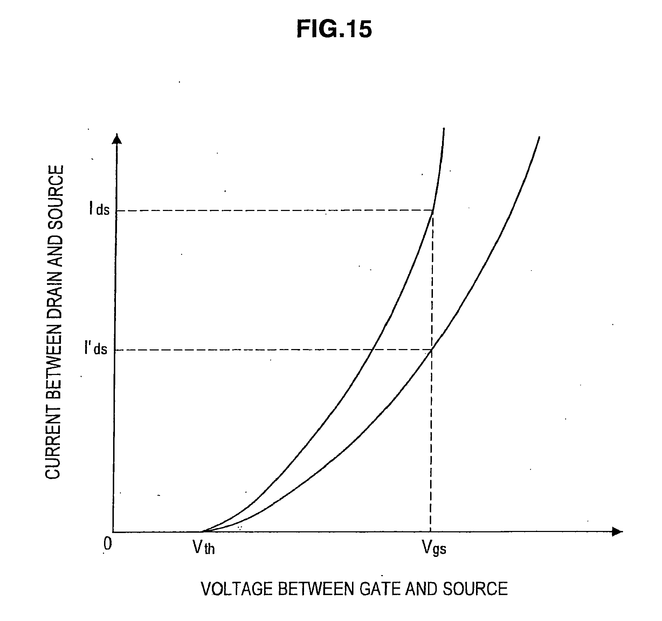

FIG 15 is an explanatory figure that explains the current-voltage characteristics of the drive transistor 14. The current-voltage characteristics of the same two types of the drive transistor 14 that are shown in FIG 14 are also shown in the form of a graph in FIG 15, specifically the current-voltage characteristics of drive transistors 14 that have different transistor mobilities.

When the mobilities of the drive transistors 14 are different, values I_{ds2} and I_{ds2}' for the drain current at a given gate voltage V_{g2} are also different.

Thus the occurrence of the characteristic variations causes variations to occur in the flowing drain current I_{ds} even if the same gate voltage V_{g} is applied to the drive transistor, which in turn causes variations in the luminance of the light that is emitted by the light emitting elements.

Therefore, correcting the variations in the threshold voltage and the mobility of the drive transistor 14 in each of the pixels, such that the current-voltage characteristics are the same in each of the pixels, would make it possible to suppress the variations in the luminance of the light that is emitted by the light emitting elements and to maintain a high-quality displayed image. A technology that corrects the variations in the threshold voltages and the mobilities of the drive transistors is disclosed in Japanese Patent Application Publication JP-A-2007-133282, for example. Hereinafter, methods for correcting the variations in the threshold voltages and the mobilities of the drive transistors according to the embodiment of the present invention will be explained in detail.

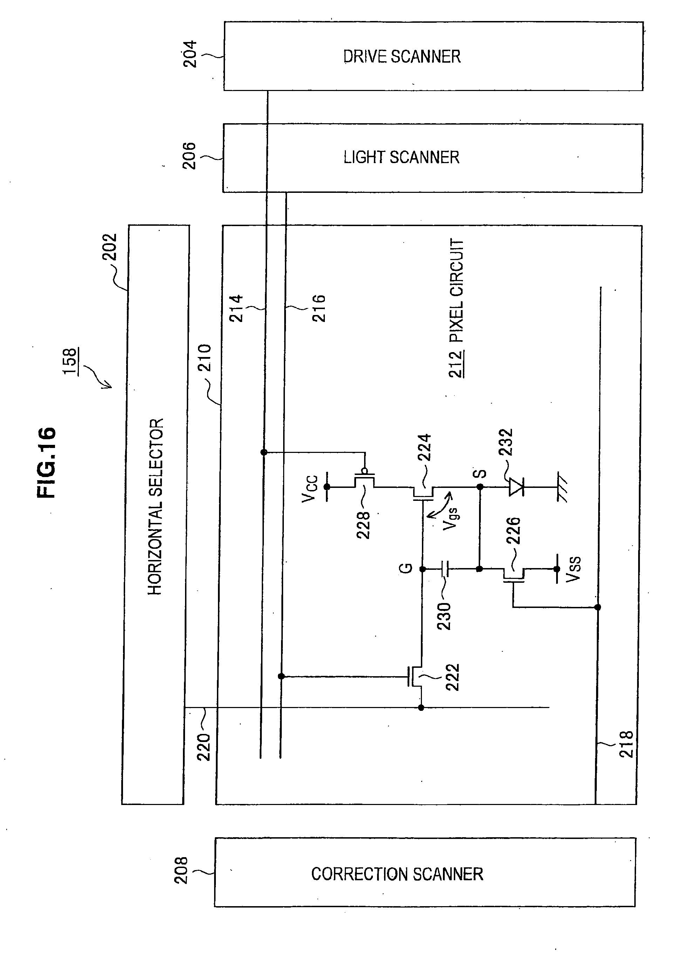

FIG 16 is an explanatory figure that explains the panel 158 according to the embodiment of the present invention that is provided with a circuit that corrects the variations in the threshold voltages and the mobilities of the drive transistors. Hereinafter, the panel 158 according to the embodiment of the present invention will be explained using FIG 16.

As shown in FIG. 16, the panel 158 is configured such that it includes a horizontal selector 202, a drive scanner 204, a light scanner 206, and a pixel array 210 that includes a plurality of pixel circuits 212. Further, each of the pixel circuits 212 includes thin film transistors (TFTs) 222, 224, 226, 228, a capacitor 230, and a light emitting element 232.

A scanning line 214 extends from the drive scanner 204, a scanning line 216 extends from the light scanner 206, and a scanning line 218 extends from a correction scanner 208, and the drive scanner 204, the light scanner 206, and the correction scanner 208 scan the pixel circuit 212 with the scanning lines 214, 216, 218. A data line 220 extends from the horizontal selector 202, and the video signal is supplied to the pixel circuit 212 from the horizontal selector 202 by the data line 220.

The thin film transistors 222, 224, 226 are N channel type polysilicon TFTs, and the thin film transistor 228 is a P channel type polysilicon TFT. The capacitor 230 forms a pixel capacitor of the pixel circuit 212. Further, the light emitting element 232 is a diode type organic EL element that is provided with an anode and a cathode, for example. Note that the present invention is not limited to these elements, and the light emitting elements may include all devices that emit light by electric current drive.

The panel 158 according to the embodiment of the present invention has been explained above using FIG. 16. Next, the pixel circuit 212 according to the embodiment of the present invention will be explained.

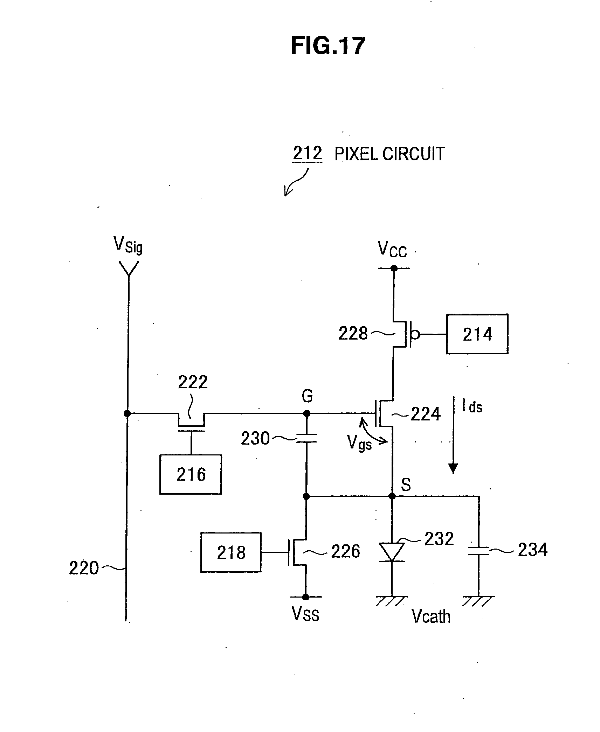

FIG 17 is an explanatory figure that explains the pixel circuit 212 according to the embodiment of the present invention. Hereinafter, the pixel circuit 212 according to the embodiment of the present invention will be explained using FIG 17.

As shown in FIG 17, and as described above, the pixel circuit 212 according to the embodiment of the present invention is configured such that it includes the thin film transistors (TFTs) 222, 224, 226, 228, the capacitor 230, and the light emitting element 232. In addition, in FIG 17, a capacitor 234 is shown as a capacitance component of the light emitting element 232.

The thin film transistor 222 is a TFT that is used for sampling the video signal line potential of a video signal V_{sig} that is supplied from the data line 220, and the gate of the thin film transistor 222 is connected to the scanning line 216. Further, the thin film transistor 224 is a drive TFT, and a gate G of the thin film transistor 224 is connected to one side of the capacitor 230, while a source S of the thin film transistor 224 is connected to the other side of the capacitor 230. In addition, the drain of the thin film transistor 224 is connected to an electric power supply V_{cc} through the thin film transistor 228.

The gate of the thin film transistor 228 is connected to the scanning line 214. Therefore, the thin film transistor 228 has the role of a switching element that operates according to the electrical potential of the scanning line 214.

The anode of the light emitting element 232 is connected to the source of the thin film transistor 224, and the cathode is connected at a ground potential V_{cath}. In addition, the thin film transistor 226 is located between the source of the thin film transistor 224 and a specified reference potential Vₛₛ. The gate of the thin film transistor 226 is connected to the scanning line 218. Therefore, in the same manner as the thin film transistor 228, the thin film transistor 226 has the role of a switching element that operates according to the electrical potential of the scanning line 218.

The pixel circuit 212 that has the configuration described above performs operations as described below. During a horizontal scanning period (1H) that is allocated to the scanning line 216, the thin file transistor 222 is conductive in accordance with a control signal WS that is supplied from the scanning line 216. During the period when it is conductive, the thin film transistor 222 also samples into the capacitor 230 the video signal V_{sig} that is supplied from the data line 220.

The capacitor 230 applies the voltage V_{gs} to the gate G of the thin film transistor 224 in accordance with the sampled video signal V_{sig}. During a specified light emitting period, the thin film transistor 224 supplies the output current I_{ds} to the light emitting element 232 in accordance with the voltage V_{gs}. The output current I_{ds} is dependent on the threshold voltage (the start-up voltage) Vₜₕ of the channel region of the thin film transistor 224. The output current I_{ds} from the thin film transistor 224 causes the light emitting element 232 to self-illuminate in accordance with the video signal V_{sig}.

The pixel circuit 212 according to the embodiment of the present invention is provided with the thin film transistors 226, 228 and is characterized by correcting the threshold voltage Vₜₕ of the drive thin film transistor 224. The correcting of the threshold voltage Vₜₕ of the thin film transistor 224 will be explained in detail.

The thin film transistors 226, 228 operate during a portion of the horizontal scanning period (1H), detecting the threshold voltage Vₜₕ of the drive thin film transistor 224 and writing to the capacitor 230. The thin film transistors 226, 228 operate while the thin film transistor 224 is conductive during the horizontal scanning period (1H) and one side of the capacitor 230 is in a state of being kept at a constant electrical potential (defined as Vₛₛ₀) by the data line 220.

When the one side of the capacitor 230 is kept at a constant electrical potential Vₛₛ₀, a charge is accumulated in the capacitor 230 until the difference between the electrical potential Vₛₛ₀ and the electrical potential of the other side of the capacitor 230 reaches the threshold voltage Vₜₕ of the thin film transistor 224. The thin film transistors 226, 228 detect the threshold voltage Vₜₕ of the drive thin film transistor 224 and write to the capacitor 230 during the first half of the horizontal scanning period (1H), and during the second half of the horizontal scanning period (1H), the thin film transistor 224 samples into the capacitor 230 the video signal V_{sig} that is supplied from the data line 220.

The capacitor 230 takes the voltage V_{gs}, in which the threshold voltage Vₜₕ of the drive thin film transistor 224 has been added to the sampled video signal V_{sig}, and applies the voltage V_{gs} between the gate G and the source S of the thin film transistor 224. This eliminates the dependence of the output current L_{ds} of the thin film transistor 224 on the threshold voltage Vₜₕ.

In addition to being dependent on the threshold voltage Vₜₕ, the output current I_{ds} of the thin film transistor 224 is also dependent on a transistor carrier mobility µ. Therefore, a characteristic of the present embodiment is that the thin film transistors 226, 228 operate during a portion of the horizontal scanning period (1H), the output current I_{ds} is taken while the video signal V_{sig} is being sampled, and the voltage V_{gs} is corrected.

The pixel circuit 212 according to the embodiment of the present invention has been explained above using FIG 17. Next, a voltage application timing of the pixel circuit 212 according to the embodiment of the present invention will be explained.

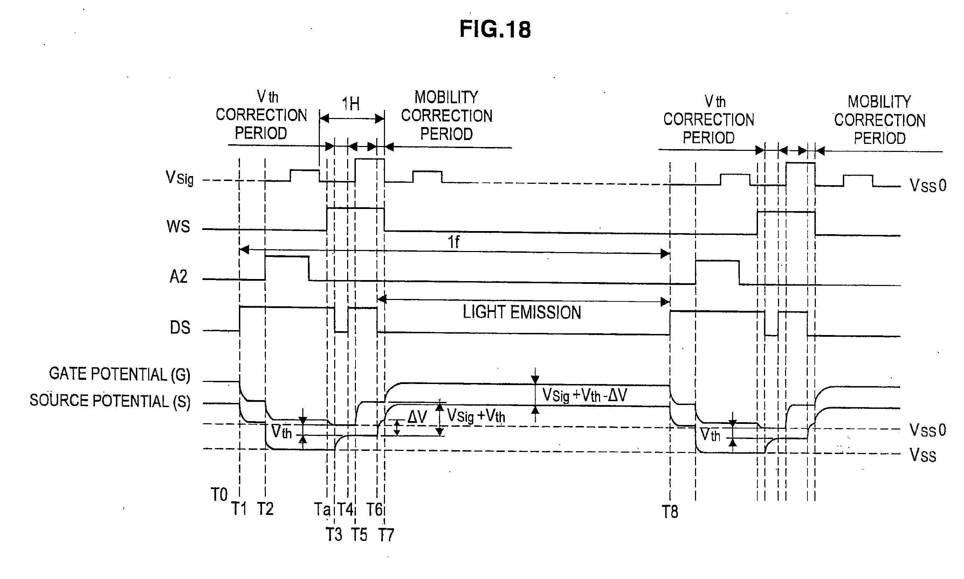

FIG 18 is an explanatory figure that shows a timing chart of an application of voltage in the pixel circuit 212 according to the embodiment of the present invention. Hereinafter, the voltage application timing of the pixel circuit 212 according to the embodiment of the present invention will be explained in detail using FIG 18.

FIG 18 shows, along a time axis T, waveforms of the control signal WS that is supplied from the scanning line 216, a control signal AZ that is supplied from the scanning line 214, and a control signal DS that is supplied from the scanning line 218. A waveform of the video signal V_{sig} that is supplied from the data line 220 is also shown. Note that the waveform of the video signal V_{sig} is only an example.

As shown in FIG 18, in the first half of the horizontal scanning period (1H), the video signal V_{sig} has the constant electrical potential Vₛₛ₀, and in the second half, it has a signal potential. Because the thin film transistors 222, 226 are both N channel type TFTs, they turn on when the scanning lines 216, 218 are at the high level and turn off when the scanning lines 216, 218 are at the low level. In contrast, the thin film transistor 228 is a P channel type TFT, so it turns off when the scanning line 214 is at the high level and turns on when the scanning line 214 is at the low level.

In the timing chart that is shown in FIG 18, T1 to T8 are shown as one field, and in the interval of that one field, each line of the pixel array 210 is scanned sequentially, one line at a time. FIG 18 shows the waveforms of the control signals WS, AZ, DS that are applied to one line's worth of pixels.

First, at a time T0, the control signals WS, AZ, DS are in the low level state. Accordingly, the thin film transistors 222, 226 are in an off state, and the thin film transistor 228 is in an on state. Therefore, the thin film transistor 224 enters a state of being connected to the electric power supply V_{cc} through the thin film transistor 228 that is in the on state, so the output current I_{ds} is supplied to the light emitting element 232 in accordance with the constant input voltage V_{gs}. The light emitting element 232, which has received the supplying of the current I_{ds}, emits light in accordance with the magnitude of the current I_{ds}.

At the time T1, the control signal DS shifts from the low level to the high level. The shifting of the control signal DS to the high level causes the thin film transistor 228 to enter the off state. Therefore, the thin film transistor 224 is cut off from the electric power supply V_{cc}, and electric current is supplied to the light emitting element 232. This causes the light emitting element 232 to abruptly enter the light nonemission state at this time.

At a time T2, the control signal AZ shifts from the low level to the high level. The shifting of the control signal AZ to the high level causes the thin film transistor 226 to enter the on state. This causes the reference potential Vₛₛ to be written to the other side of the capacitor 230 and to the source S of the thin film transistor 224. At this time, the gate potential of the thin film transistor 224 is at high impedance, so a gate potential S decreases in conjunction with a decrease in a source potential S. the control signal AZ then shifts from the high level to the low level, and the thin film transistor 226 enters the off state.

At a time T3, the control signal WS shifts from the low level to the high level. The shifting of the control signal WS to the high level causes the thin film transistor 222 to enter the on state. This causes the video signal to be conducted from the data line 220, but at this time, the video signal line potential is set to the specified constant voltage Vₛₛ₀. Here, the values of Vₛₛ and Vₛₛ₀ are set such that Vₛₛ₀ minus Vₛₛ is greater than Vₜₕ. Furthermore, Vₛₛ₀ minus Vₛₛ is equivalent to the voltage V_{gs} between the gate and the source of the thin film transistor 224.

At the time T3, the control signal DS shifts from the high level to the low level. The shifting of the control signal DS to the low level causes the thin film transistor 228 to enter the on state and causes the correcting of Vₜₕ to be performed. The video signal line potential at this time is maintained at the constant voltage Vₛₛ₀ in order to perform the correcting of Vₜₕ accurately.

Because the thin film transistor 228 enters the on state, the thin film transistor 224 is connected to the electric power supply V_{cc}, and the electric current I_{ds} flows. The flowing of the electric current I_{ds} causes a charge to be accumulated in the capacitor 230 and causes the source potential S of the thin film transistor 224 that is connected to the capacitor 230 to increase. In contrast to this, a gate potential G of the thin film transistor 224 that is connected to the capacitor 230 is in a state of being fixed at the constant voltage Vₛₛ₀.

Therefore, as the charge is accumulated in the capacitor 230, the source potential S of the thin film transistor 224 increases, and as soon as the input voltage V_{gs} of the thin film transistor 224 reaches Vₜₕ, the thin film transistor 224 is cut off. When the thin film transistor 224 is cut off, the source potential S of the thin film transistor 224 becomes equal to Vₛₛ₀ minus Vₜₕ.

Next, at a time T4, the control signal DS returns to the high level from the level, causing the thin film transistor 228 to enter the off state, which terminates the correcting of Vₜₕ. At this time, a voltage that is equivalent to Vₜₕ is in a state of being written to the capacitor 230.

Thus, after the correcting of Vₜₕ has been performed between the times T3 and T4, the electrical potential of the video signal increases from Vₛₛ₀ to V_{sig} at a time T5. This causes the video signal that has the video signal line potential V_{sig} to be written to the capacitor 230. The capacitance of the capacitor 230 is sufficiently smaller than the capacitance of the capacitor 234 that is the equivalent capacitance component of the light emitting element 232. Accordingly, the greater part of the video signal is written to the capacitor 230. Therefore, the voltage V_{gs} between the gate and the source of the thin film transistor 224 reaches a level at which the previously detected and maintained Vₜₕ and the sampled V_{sig} have been added. The sampling of the video signal is performed between times T5 and T7.

Next, at a time T6, the control signal DS shifts from the high level to the low level and the thin film transistor 224 enters the on state. The thin film transistor 224 therefore enters a state of being connected to the electric power supply V_{cc} through the thin film transistor 228 that is in the on state, so the output current I_{ds} is supplied to the light emitting element 232 in accordance with the specified input voltage V_{gs}.

During the period between the times T6 and T7, the thin film transistor 222, 228 are both in the on state. During this period, the correcting of the mobility µ of the thin film transistor 224 is performed.

During the period between the times T6 and T7, the gate G of the thin film transistor 224 is in a state of being fixed at the video signal line potential V_{sig}, so the drain current I_{ds} flows to the thin film transistor 224. At this time, if a threshold voltage of the light emitting element 232 is defined as V_{thEL,} then setting V_{thEL} such that Vₛₛ₀ minus Vₜₕ is less than V_{thEL} causes the light emitting element 232 to enter a reverse bias state, with the light emitting element 232 having only a capacitance characteristic, without having a diode characteristic.

Because the light emitting element 232 having the capacitance characteristic, the electric current I_{ds} that flows to the thin film transistor 224 is written at a capacitance that combines a capacitance Cₛ of the capacitor 230 and a capacitance C_{oled} of the capacitor 234. This causes the electrical potential of the source S of the thin film transistor 224 to increase (expressed as ΔV in FIG 18).

The amount of the increase ΔV in the electrical potential of the source S of the thin film transistor 224 is subtracted from the voltage V_{gs} between the gate and the source that is maintained in the thin film transistor 224. In other words, negative feedback is applied. Thus, using the output current I_{ds} of the thin film transistor 224 for reverse feedback to the voltage V_{gs} between the gate and the source of the thin film transistor 224 makes it possible to correct the mobility µ of the thin film transistor 224. Note that the amount of the increase ΔV in the electrical potential of the source S of the thin film transistor 224 can be optimized by adjusting the time span from T6 to T7.

At the time T7, the control signal WS shifts from the high level to the low level, and the shifting of the control signal WS to the low level causes the thin film transistor 222 to enter the off state. This causes the gate G of the thin film transistor 224 to be cut off from the data line 220 and causes the video signal V_{sig} to be applied, such that the gate potential of the gate G of the thin film transistor 224 increases in conjunction with the source potential of the source S. Throughout the period when the gate potential of the thin film transistor 224 increases, the voltage V_{gs} between the gate and the source that is maintained in the thin film transistor 224 maintains a value of V_{sig} minus ΔV plus Vₜₕ.

In conjunction with the increase in the source potential of the source S of the thin film transistor 224, the reverse bias state of the light emitting element 232 is canceled, so the flowing in of the output current I_{ds} of the thin film transistor 224 causes the light emitting element 232 to actually start emitting light The relationship between the output current I_{ds} of the thin film transistor 224 and the voltage V_{gs} between the gate and the source can be expressed by equation (6) below. $\begin{matrix}Equation 1 \\ {I}_{ds} = \frac{1}{2} ⁢ μ ⁢ \frac{W}{L} ⁢ {C}_{ox} ⁢ {\left({V}_{gs}-{V}_{th}\right)}^{2}\end{matrix}$

If V_{sig} - ΔV + Vₜₕ is substituted for V_{gs} in equation (6), and 1/2 • W/L is expressed by k, then equation (6) becomes equation (7). $\begin{matrix}Equation 2 \\ \begin{matrix}{I}_{ds} & = \frac{1}{2} ⁢ μ ⁢ \frac{W}{L} ⁢ {C}_{ox} ⁢ {\left({V}_{sig}-Δ⁢V\right)}^{2} \\ & = kμ ⁢ {\left({V}_{sig}-Δ⁢V\right)}^{2}\end{matrix}\end{matrix}$

In other words, it can be understood that the output current I_{ds} of the thin film transistor 224 is not dependent on the voltage V_{gs} between the gate and the source of the thin film transistor 224. Furthermore, because ΔV acts such as to cancel the effect of the mobility µ, the output current I_{ds} of the thin film transistor 224 becomes substantially dependent only on the video signal V_{sig}.

Next, at the time T7, the control signal DS shifts from the low level to the high level, and the shifting of the control signal DS to the high level causes the thin film transistor 228 to enter the off state and causes the electric current to cease being supplied to the light emitting element 232, so the light emitting element 232 stops emitting light

The operations that are described above are then repeated for each field, and the executed operation of the light emitting element 232 is performed while the threshold voltage Vₜₕ and the mobility µ of the thin film transistor 224 are corrected.

The voltage application timing of the pixel circuit 212 according to the embodiment of the present invention has been explained above using FIG. 18.

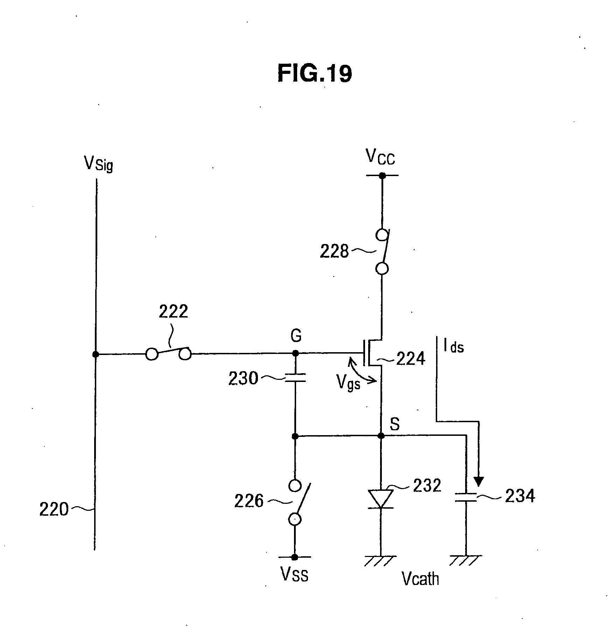

FIG. 19 is an explanatory figure that schematically shows the state of the pixel circuit 212 during the mobility correction period T6 to T7 in FIG. 18. As shown in FIG 19, during the period T6 to T7, the thin film transistors 222, 228 are on, and the thin film transistor 226 is off. In this state, the electrical potential of the source S of the thin film transistor 224 is Vₛₛ₀ minus Vₜₕ.

The electrical potential of the source S of the thin film transistor 224 is also the anode potential of the light emitting element 232. As described above, setting V_{thEL} such that Vₛₛ₀ minus Vₜₕ is less than V_{thEL} causes the light emitting element 232 to be placed into a reverse bias state, having the capacitance characteristic, but not the diode characteristic.

Therefore, the drain current I_{ds} that flows to the thin film transistor 224 flows at a combined capacitance C that is the sum of the capacitance Cₛ of the capacitor 230 and the capacitance C_{oled} of the capacitor 234 that serves as the equivalent capacitance of the light emitting element 232. In other words, the mobility of the thin film transistor 224 to be corrected by using a portion of the electric current I_{ds} that flows to the thin film transistor 224 as the negative feedback to the capacitor 230.

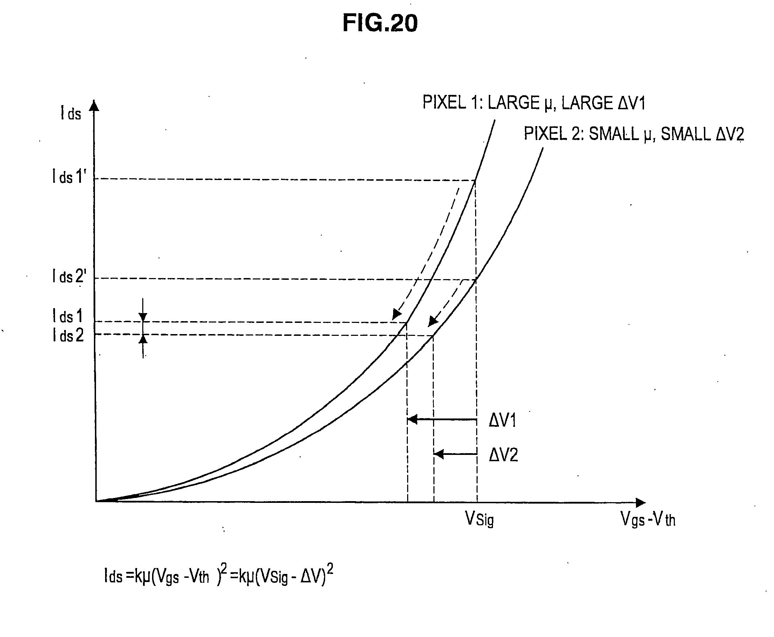

FIG 20 is an explanatory figure that shows the equation (7) in the form of a graph. The drain current I_{ds} that flows to the thin film transistor 224 is shown on the vertical axis, and the video signal line potential V_{sig} is shown on the horizontal axis. Note that the graph in FIG 20 shows a comparison of two pixels, pixel 1 and pixel 2.

In pixel 1, the mobility µ of the drive transistor (equivalent to the thin film transistor 224) is relatively large compared to pixel 2, and in pixel 2, the mobility µ of the drive transistor (equivalent to the thin film transistor 224) is relatively small compared to pixel 1. Thus, in a case where drive transistors with different mobilities µ are used in different pixels, then when video signals with the same level are input to the different pixels, if the corrections of the mobilities µ are not performed, the luminances will differ from one pixel to the next. In other words, as shown in FIG. 20, a difference will arise between an electric current I_{ds1}' that flows to pixel 1, whose mobility µ is large, and an electric current I_{ds2}' that flows to pixel 2, whose mobility µ is small.

Accordingly, in the present embodiment, the mobility m is corrected by using the output current as negative feedback to the input voltage side. As equation (7) makes clear, the greater the mobility µ is, the larger the electric current I_{ds} becomes. Therefore, the greater the mobility µ is, the larger the amount ΔV of the negative feedback becomes.

As shown in FIG 20, if the large mobility µ of pixel 1 is corrected by ΔV1, the output current decreases from I_{ds1}' to I_{ds1}. In the same manner, if the small mobility µ of pixel 2 is corrected by ΔV2, the output current decreases from I_{ds2}' to I_{ds2}. However, the amount of the decrease in the output current for pixel 2 is less than that for pixel 1. I_{ds1} and I_{ds2} thus become roughly equal, and the variation in the mobility is corrected.

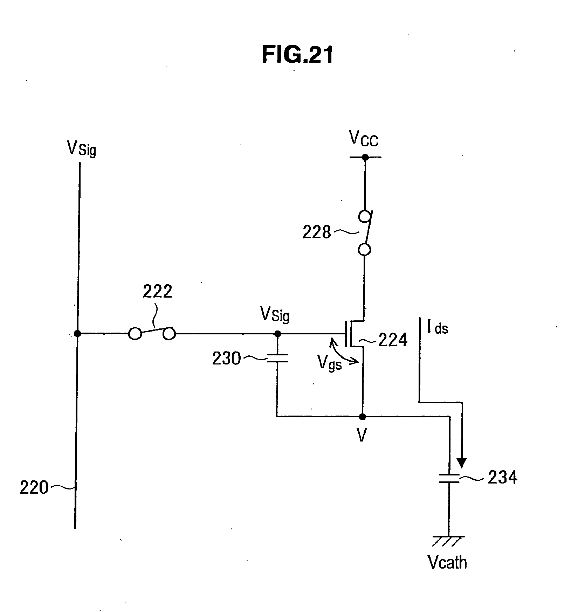

FIG. 21 is an explanatory figure that explains the pixel circuit 212 in the state in which the thin film transistors 222 and 228 are in the on state. Hereinafter, a numerical analysis of the mobility correction according to the present embodiment will be performed using FIG 21. With the thin film transistors 222 and 228 in the on state, as shown in FIG. 21, if the source potential of the thin film transistor 224 is defined as a variable V, the drain current I_{ds} that flows to the thin film transistor 224 is expressed as shown in equation (8) below. $\begin{matrix}Equation 3 \\ {I}_{ds} = kμ ⁢ {\left({V}_{gs}-{V}_{th}\right)}^{2} = kμ ⁢ {\left({V}_{sig}-V-{V}_{th}\right)}^{2}\end{matrix}$

The relationship between the drain current I_{ds} and the capacitance C of the capacitor 230 causes the relationship that is shown in equation (9) to come into existence. $\begin{matrix}Equation 4 \\ \begin{matrix}\begin{matrix}{I}_{ds}\end{matrix} & = \frac{dQ}{dt} = C ⁢ \frac{dV}{dt} \\ ⇔ & \int \frac{1}{C} ⅆ t = \int \frac{1}{{I}_{ds}} ⅆ V\end{matrix}\end{matrix}$

Therefore, if the drain current I_{ds} in equation (8) is substituted into equation (9), the result is equation (10). $Equation 5$ $\begin{matrix}{\int }_{0}^{τ} ⁢ \frac{1}{C} ⅆ t = {\int }_{- {V}_{th}}^{V} ⁢ \frac{1}{kμ ⁢ {\left({V}_{sig}-V-{V}_{th}\right)}^{2}} ⅆ V \\ ⇔ \frac{kμ}{C} ⁢ t = {\left[\frac{1}{{V}_{sig} - V - {V}_{th}}\right]}_{- {V}_{th}}^{V} = \frac{1}{{V}_{sig} - V - {V}_{th}} - \frac{1}{{V}_{sig}} \\ ⇔ {V}_{sig} - V - {V}_{th} = \frac{1}{\begin{matrix}1 \\ {V}_{sig}\end{matrix} + \begin{matrix}kμ \\ C\end{matrix} t} = \frac{{V}_{sig}}{1 + {V}_{sig} ⋅ \begin{matrix}kμ \\ C\end{matrix} t}\end{matrix}$

Here, the initial state of the source potential V is -Vₜₕ, and if the mobility correction period (the period that is shown as T6 to T7 in FIG 18) is defined as t, the drain current I_{ds} in relation to the mobility correction period t can be expressed as shown in equation (11) below. $\begin{matrix}Equation 6 \\ \begin{matrix}{\int }_{0}^{τ} ⁢ \frac{1}{C} ⅆ t = {\int }_{- {V}_{th}}^{V} ⁢ \frac{1}{kμ ⁢ {\left({V}_{sig}-V-{V}_{th}\right)}^{2}} ⅆ V \\ ⇔ \frac{kμ}{C} ⁢ t = {\left[\frac{1}{{V}_{sig} - V - {V}_{th}}\right]}_{- {V}_{th}}^{V} = \frac{1}{{V}_{sig} - V - {V}_{th}} - \frac{1}{{V}_{sig}} \\ ⇔ {V}_{sig} - V - {V}_{th} = \frac{1}{\begin{matrix}1 \\ {V}_{sig}\end{matrix} + \begin{matrix}kμ \\ C\end{matrix} t} = \frac{{V}_{sig}}{1 + {V}_{sig} ⋅ \begin{matrix}kμ \\ C\end{matrix} t}\end{matrix}\end{matrix}$

The methods for correcting the variations in the threshold voltages and the mobilities of the drive transistors according to the embodiment of the present invention have been explained above.

Correcting the characteristics of the drive transistors in a panel 138 in this manner, thus making the current-voltage characteristics of the transistors uniform, means that in the signal processing integrated circuit 110, transmitting the video signal that has the gamma characteristic for its input/output characteristic, without taking into account the characteristics of the drive transistors of the panel 138, causes each of the voltages that is applied to the drive transistors in the panel 138 to have the linear characteristic.

In the present embodiment, the video signal is converted in the gamma conversion unit 132 of the signal processing integrated circuit 110 such that it has the gamma characteristic. Converting the video signal in the gamma conversion unit 132 such that it has the gamma characteristic offsets the current-voltage characteristics of the drive transistors in the panel 138, such that the relationship between the electric current that is applied to the organic EL element and the light quantity of the subject has the linear characteristic, as shown in FIG. 2E.

As explained above, according to the embodiment of the present invention, performing the correction such that the characteristics of the drive transistors that are provided in the panel 138 are uniform makes it possible to display a high-quality image on the panel 138.

Furthermore, in the signal processing integrated circuit 110, the video signal that has the gamma characteristic for its input/output characteristic may be transmitted without taking into account the characteristics of the drive transistors of the panel 138. Transmitting the video signal that has the gamma characteristic for its input/output characteristic from the signal processing integrated circuit 110 means that the video signal is multiplied by the current-voltage characteristics of the transistors of the panel 13 8, such that the voltage that is applied to the organic EL element has the linear characteristic. Moreover, because the panel 138 displays the image using the organic EL elements in which the relationship between the input current and the luminance of the emitted light has the linear characteristic, the panel 138 can display the image at a luminance that corresponds to the input signal level. This makes it possible to demonstrate more effectively the characteristics of the self-illuminating element such as the organic EL element that emits light with the amount of light emission in accordance with the amount of electric current

The preferred embodiments of the present invention have been explained above with reference to the attached drawings, but the present invention is obviously not limited to the examples that have been given. It should be understood by those skilled in the art that various modifications, combinations, sub-combinations and alterations may occur depending on design requirements and other factors insofar as they are within the scope of the appended claims or the equivalents thereof

For example, in the embodiment that is described above, the threshold voltage Vₜₕ and the mobility of the drive thin film transistor 224 are corrected by the two thin film transistors 222, 228, but the number of the thin film transistors that correct the threshold voltage Vₜₕ and the mobility is not limited by this example. For example, the threshold voltage Vₜₕ and the mobility of the drive transistor may also be corrected by providing at least three thin film transistors, and the threshold voltage Vₜₕ and the mobility of the drive transistor may also be corrected by providing less than two thin film transistors.

## Claims

1. A display device that includes a pixel that has a light emitting element that emits light in accordance with an amount of an electric current and a pixel circuits that controls, in accordance with a video signal, an electric current that is applied to the light emitting element, a scanning line that supplies to the pixel, in a specified scan cycle, a selection signal that selects the pixel that will emit light, a data line that supplies a video signal to the pixel, and a display portion in which drive transistors to which the video signal is supplied are arranged in the form of a matrix, the display device comprising:
a gamma conversion portion that converts the video signal such that it has a gamma characteristic; and
a transistor control portion that controls current-voltage characteristics of the transistors such that the gamma characteristic of the signal that is converted by the gamma conversion portion becomes a linear characteristic when it is multiplied by the current-voltage characteristics of the transistors.

2. The display device according to claim 1,
wherein the transistor control portion includes a voltage control portion that controls start-up voltages of the transistors.

3. The display device according to claim 1,
wherein the transistor control portion includes a mobility correction portion that corrects mobilities of the transistors.

4. The display device according to claim 1, further comprising:
a linear conversion portion that converts the video signal that has the gamma characteristic into a video signal that has the linear characteristic.

5. The display device according to claim 1,
wherein the gamma conversion portion converts a video signal that has the linear characteristic such that it has the gamma characteristic.

6. A drive method of a display device that includes a pixel that has a light emitting element that emits light in accordance with an amount of an electric current and a pixel circuits that controls, in accordance with a video signal, an electric current that is applied to the light emitting element, a scanning line that supplies to the pixel, in a specified scan cycle, a selection signal that selects the pixel that will emit light, a data line that supplies a video signal to the pixel, and a display portion in which drive transistors to which the video signal is supplied are arranged in the form of a matrix, the drive method comprising the steps of:
converting the video signal such that it has a gamma characteristic; and
controlling current-voltage characteristics of the transistors such that the gamma characteristic of the converted signal becomes a linear characteristic when it is multiplied by the current-voltage characteristics of the transistors.

7. The display device drive method according to claim 6, further comprising the step of:
controlling start-up voltages of the transistors when the current-voltage characteristics of the transistors are being controlled.

8. The display device drive method according to claim 6, further comprising the step of:
correcting mobilities of the transistors when the current-voltage characteristics of the transistors are being controlled.

9. The display device drive method according to claim 6, further comprising the step of
converting the video signal that has the gamma characteristic into a video signal that has a linear characteristic.

10. The display device drive method according to claim 6,
wherein the video signal that is converted such that it has a gamma characteristic is a video signal that has a linear characteristic.
